(19)

Europäisches
Patentamt

European
Patent Office

Office européen
des brevets

(11)  **EP 4 637 262 A1**

(12)  **EUROPEAN PATENT APPLICATION**
published in accordance with Art. 153(4) EPC

(43) Date of publication:
**22.10.2025  Bulletin 2025/43**

(21) Application number: **24741110.1**

(22) Date of filing: **02.01.2024**

(51) International Patent Classification (IPC):
*H04W 76/40* (2018.01)

(52) Cooperative Patent Classification (CPC):
**H04W 72/0446; H04W 72/0453; H04W 72/1273;
H04W 72/231; H04W 72/25; H04W 72/40;
H04W 76/40**

(86) International application number:
**PCT/CN2024/070130**

(87) International publication number:
**WO 2024/149111 (18.07.2024 Gazette 2024/29)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.01.2023  CN 202310200629
21.03.2023  CN 202310317372**

(71) Applicant: **Huawei Technologies Co., Ltd.
Shenzhen, Guangdong 518129 (CN)**

(72) Inventors:
• **WANG, Bichai
Shenzhen, Guangdong 518129 (CN)**
• **LI, Xueru
Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54)  **SIDELINK COMMUNICATION METHOD AND APPARATUS**

(57)  This application provides a sidelink communication method and a communication apparatus. According to this application, a first terminal device may multiplex MAC SDUs sent to a plurality of second terminal devices into one first TB, and transmit the first TB on one PSSCH resource, so that resource utilization can be improved. In addition, the first terminal device may further send first indication information to the plurality of second terminal devices, to indicate whether the first TB sent by the first terminal device includes a MAC SDU corresponding to each second terminal device, so that the plurality of second terminal devices may determine, based on the first indication information, whether to receive the first TB. Further, if the first indication information indicates that the first TB does not include a MAC SDU corresponding to a second terminal device, the second terminal device does not receive the first TB, so that power consumption of the second terminal device can be reduced.

Method 200

| First terminal device | N second terminal devices | M second terminal devices |
|---|---|---|
| | S210: First configuration information | |
| | S220: Second source address and/or second destination address | |
| | S230: First TB | |
| | S240: First indication information | |
| S250: Feedback information | | |

FIG. 2

EP 4 637 262 A1

## Description

This application claims priority to Chinese Patent Application No. 202310200629.X, filed with the China National Intellectual Property Administration on January 12, 2023 and entitled "SIDELINK COMMUNICATION METHOD AND DEVICE", which is incorporated herein by reference in its entirety. In addition, this application further claims priority to Chinese Patent Application No. 202310317372.6, filed with the China National Intellectual Property Administration on March 21, 2023 and entitled "SIDELINK COMMUNICATION METHOD AND COMMUNICATION APPARATUS", which is incorporated herein by reference in its entirety.

## TECHNICAL FIELD

Embodiments of this application relate to the communication field, and more specifically, to a sidelink communication method and apparatus.

## BACKGROUND

A large quantity of small packet services are transmitted in an industrial internet. For example, in a mobile control (mobile control) scenario, one programmable logic controller (programmable logic controller, PLC) needs to exchange a large quantity of small packet services with a plurality of sensors/actuators (sensor/-actuator, S/A), and a size of a small packet service is, for example, 20 to 50 bytes (bytes). In an existing sidelink (sidelink, SL) resource pool configuration, one subchannel includes at least 10 physical resource blocks (physical resource block, PRB), and a quantity of resources that need to be occupied by the small packet service may be far less than a quantity of resources included in each subchannel. Therefore, scheduling a transmission resource for each small packet service in a unit of a subchannel causes low resource utilization, and independently scheduling transmission of each small packet causes high sidelink control information (sidelink control information, SCI) overheads. If a quantity of PRBs included in each subchannel is directly reduced, although flexibility of resource scheduling can be improved, an additional problem is caused. For example, an increase in a quantity of subchannels leads to an increase in complexity of blind detection of a physical sidelink control channel (physical sidelink control channel, PSCCH), and an increase in a quantity of symbols occupied by the PSCCH leads to an increase in a decoding delay.

## SUMMARY

This application provides a sidelink notification method and a communication apparatus, to improve resource utilization of a small packet transmission service.

According to a first aspect, a sidelink communication method is provided. The method may be performed by a terminal device, or may be performed by a component (for example, a chip or a circuit) of a terminal device. This is not limited. For ease of description, an example in which the method is performed by a first terminal device is used below for description.

The method includes: The first terminal device sends a first transport block (transport block, TB) to M second terminal devices. The first TB corresponds to at least two first source addresses and/or at least two first destination addresses. The at least two first source addresses correspond to at least two of the M second terminal devices. The at least two first destination addresses correspond to at least two of the M second terminal devices. M is a positive integer greater than 1. The first terminal device sends first indication information to the M second terminal devices. The first indication information indicates whether the first TB includes a media access control (media access control, MAC) service data unit (service data unit, SDU) corresponding to an $m^{th}$ second terminal device in the M second terminal devices, and m=1, 2, ..., or M.

For example, a first source address corresponding to the $m^{th}$ second terminal device is a source address corresponding to data sent by the first terminal device to the $m^{th}$ second terminal device, for example, a layer 2 (layer 2, L2) source address or a layer 1 (layer 1, L1) source address. A first destination address corresponding to the $m^{th}$ second terminal device is a destination address corresponding to the data sent by the first terminal device to the $m^{th}$ second terminal device, for example, a layer 2 destination address or a layer 1 destination address.

Based on the foregoing technical solution, when the first terminal device sends MAC SDUs to a plurality of second terminal devices, the first terminal device may multiplex the MAC SDUs sent to the plurality of second terminal devices into one first TB, and transmit the first TB on one physical sidelink shared channel (physical sidelink shared channel, PSSCH) resource, so that resource utilization can be improved.

In addition, when the first terminal device sends MAC SDUs to some of the plurality of second terminal devices, the first terminal device may send the first indication information to the plurality of second terminal devices, to indicate whether the first TB sent by the first terminal device includes a MAC SDU corresponding to each second terminal device, so that the plurality of second terminal devices may determine, based on the first indication information, whether to receive the first TB. Further, if the first indication information indicates that the first TB does not include a MAC SDU corresponding to a second terminal device, the second terminal device does not receive the first TB, so that power consumption of the second terminal device can be reduced.

For example, the first indication information includes M bits in one-to-one correspondence with the M second terminal devices. An $m^{th}$ bit in the M bits indicates whether the first TB includes the MAC SDU corresponding to the $m^{th}$ second terminal device. The $m^{th}$ bit corresponds to the $m^{th}$ second terminal device.

For example, if a value of a bit #m in the M bits is a first value, the bit #m indicates that the TB sent by the first terminal device includes the MAC SDU corresponding to the $m^{th}$ second terminal device; or if a value of a bit #m is a second value, the bit #m indicates that the TB sent by the first terminal device does not include the MAC SDU corresponding to the $m^{th}$ second terminal device. The bit #m is the $m^{th}$ bit in the M bits. The first value is 1, and the second value is 0. Alternatively, the first value is 0, and the second value is 1.

For example, the first indication information is carried in sidelink control information (sidelink control information, SCI) associated with the first TB.

With reference to the first aspect, in some implementations of the first aspect, the method further includes: The first terminal device sends a second source address and/or a second destination address to the M second terminal devices. The second source address corresponds to the M second terminal devices. The second destination address corresponds to the M second terminal devices. All or a part of bits of the second source address and/or the second destination address are carried in the SCI associated with the first TB.

Based on the foregoing technical solution, when the SCI associated with the first TB carries the second source address and/or the second destination address, after receiving the SCI associated with the first TB, the $m^{th}$ second terminal device in the M second terminal devices may determine, based on the second source address and/or the second destination address, that the SCI associated with the first TB is SCI sent by the first terminal device to the $m^{th}$ second terminal device. Then, the $m^{th}$ second terminal device parses the SCI associated with the first TB. The $m^{th}$ second terminal device may detect the first TB on a PSSCH associated with the SCI associated with the first TB. On the contrary, after receiving the SCI associated with the first TB, another second terminal device other than the M second terminal devices determines, based on the second source address and/or the second destination address, that the SCI associated with the first TB is not SCI sent by the first terminal device to the another second terminal device, so that the another second terminal device does not detect the first TB on the PSSCH associated with the SCI associated with the first TB.

For example, a part of bits of the second source address and/or the second destination address are carried in the SCI associated with the first TB, and a remaining part of bits of the second source address and/or the second destination address are carried in a sidelink shared channel (sidelink shared channel, SL-SCH) subheader corresponding to the first TB.

With reference to the first aspect, in some implementations of the first aspect, the method further includes: The first terminal device sends first configuration information to the M second terminal devices. The first configuration information is used to configure at least one of the following: a correspondence between the M second terminal devices and the M bits, where the $m^{th}$ bit in the M bits indicates whether the first TB includes the MAC SDU corresponding to the $m^{th}$ second terminal device, and m=1, 2, ..., or M; or the second source address and/or the second destination address, where the second source address corresponds to the M second terminal devices, and the second destination address corresponds to the M second terminal devices.

With reference to the first aspect, in some implementations of the first aspect, the first TB includes K groups of MAC SDUs. The K groups of MAC SDUs correspond to N second terminal devices in the M second terminal devices. K is a positive integer, and $1<K\leq N$. A subheader corresponding to a $1^{st}$ MAC SDU in a $k^{th}$ group of MAC SDUs in the K groups of MAC SDUs includes a first source address and/or a first destination address corresponding to the $k^{th}$ group of MAC SDUs. The first source address and/or the first destination address corresponding to the $k^{th}$ group of MAC SDUs correspond/corresponds to one or more of the N second terminal devices, and k=1, 2, ..., or K.

Based on the foregoing technical solution, a subheader corresponding to one MAC SDU in each group of MAC SDUs in the first TB sent by the first terminal device includes a first source address and/or a first destination address corresponding to the MAC SDU, so that a second terminal device may identify, based on the first source address and/or the first destination address, a MAC SDU that is included in the first TB and that corresponds to the second terminal device. Compared with a manner in which a subheader corresponding to each MAC SDU includes a first source address and/or a first destination address corresponding to the MAC SDU, this can reduce a quantity of bits of the first TB.

With reference to the first aspect, in some implementations of the first aspect, a subheader corresponding to a $k_i^{th}$ MAC SDU in the $k^{th}$ group of MAC SDUs includes second indication information. The second indication information indicates whether a subheader corresponding to a MAC SDU after the $k_i^{th}$ MAC SDU includes a first source address and/or a first destination address corresponding to the MAC SDU after the $k_i^{th}$ MAC SDU, $k_i$=1, 2, ..., or $l_k$, and $l_k$ represents a quantity of MAC SDUs included in the $k^{th}$ group of MAC SDUs. Alternatively, the second indication information indicates that a subheader corresponding to a MAC SDU after the $k_i^{th}$ MAC SDU includes a first source address and/or a first destination address corresponding to the MAC SDU after the $k_i^{th}$ MAC SDU, $k_i$=$l_k$, and $l_k$ represents a quantity of MAC SDUs included in the $k^{th}$ group of MAC SDUs.

Based on the foregoing technical solution, an $n^{th}$ second terminal device may determine, based on the second indication information included in the subheader corresponding to the $k_i^{th}$ MAC SDU in the $k^{th}$ group of MAC SDUs, whether a subheader corresponding to a MAC SDU #$k_i$' (that is, the MAC SDU after the $k_i^{th}$ MAC SDU) includes a first source address and/or a first destination address corresponding to the MAC SDU #$k_i$'. If the $n^{th}$ second terminal device determines that the subheader corresponding to the MAC SDU #$k_i$' includes the first source address and/or the first destination address corresponding to the MAC SDU #$k_i$', the $n^{th}$ second terminal device parses the subheader corresponding to the MAC SDU #$k_i$' to obtain the first source address and/or the first destination address corresponding to the MAC SDU #$k_i$'; or if the $n^{th}$ second terminal device determines that the subheader corresponding to the MAC SDU #$k_i$' does not include the first source address and/or the first destination address corresponding to the MAC SDU #$k_i$', the $n^{th}$ second terminal device may determine that the first source address and/or the first destination address corresponding to the MAC SDU #$k_i$' are/is the same as a first source address and/or a first destination address corresponding to the $k_i^{th}$ MAC SDU, that is, the MAC SDU #$k_i$' belongs to the $k^{th}$ group of MAC SDUs.

With reference to the first aspect, in some implementations of the first aspect, the first TB includes K groups of MAC SDUs. The K groups of MAC SDUs correspond to N second terminal devices in the M second terminal devices. K is a positive integer, and $1<K\leq N$. The first TB includes K SL-SCH subheaders. The K SL-SCH subheaders are in one-to-one correspondence with the K groups of MAC SDUs. An SL-SCH subheader corresponding to a $k^{th}$ group of MAC SDUs in the K groups of MAC SDUs includes a first source address and/or a first destination address corresponding to the $k^{th}$ group of MAC SDUs. The first source address and/or the first destination address corresponding to the $k^{th}$ group of MAC SDUs correspond/corresponds to one or more of the N second terminal devices, and k=1, 2, ..., or K.

Based on the foregoing technical solution, an SL-SCH subheader corresponding to each group of MAC SDUs in the first TB sent by the first terminal device includes first source addresses and/or first destination addresses corresponding to the MAC SDUs, so that a second terminal device may identify, based on the first source addresses and/or the first destination addresses, a MAC SDU that is included in the first TB and that corresponds to the second terminal device.

With reference to the first aspect, in some implementations of the first aspect, a subheader corresponding to a $k_i^{th}$ MAC SDU in the $k^{th}$ group of MAC SDUs includes third indication information. The third indication information indicates whether an SL-SCH subheader corresponding to a $(k+1)^{th}$ group of MAC SDUs is included after the $k_i^{th}$ MAC SDU, $k_i$=1, 2, ..., or $I_k$, and $I_k$ represents a quantity of MAC SDUs included in the $k^{th}$ group of MAC SDUs. Alternatively, the third indication information indicates that an SL-SCH subheader corresponding to a $(k+1)^{th}$ group of MAC SDUs is included after the $k_i^{th}$ MAC SDU, $k_i$=$I_k$, and $I_k$ represents a quantity of MAC SDUs included in the $k^{th}$ group of MAC SDUs.

Based on the foregoing technical solution, after receiving the first TB, an $n^{th}$ second terminal device may determine, based on the third indication information included in the subheader corresponding to the $k_i^{th}$ MAC SDU in the $k^{th}$ group of MAC SDUs, whether the SL-SCH subheader corresponding to the $(k+1)^{th}$ group of MAC SDUs is included after the $k_i^{th}$ MAC SDU. If the $n^{th}$ second terminal device determines that the SL-SCH subheader corresponding to the $(k+1)^{th}$ group of MAC SDUs is included after the $k_i^{th}$ MAC SDU, the $n^{th}$ second terminal device determines that the $k_i^{th}$ MAC SDU is a last MAC SDU in the $k^{th}$ group of MAC SDUs, and then the $n^{th}$ second terminal device may parse the SL-SCH subheader after the $k_i^{th}$ MAC SDU to obtain a first source address and/or a first destination address corresponding to the $(k+1)^{th}$ group MAC SDUs; or if the $n^{th}$ second terminal device determines that the SL-SCH subheader corresponding to the $(k+1)^{th}$ group of MAC SDUs is not included after the $k_i^{th}$ MAC SDU, the $n^{th}$ second terminal device may determine that a MAC SDU after the $k_i^{th}$ MAC SDU belongs to the $k^{th}$ group of MAC SDUs, that is, a first source address and/or a first destination address corresponding to the MAC SDU after the $k_i^{th}$ MAC SDU are/is the same as a first source address and/or a first destination address corresponding to the $k_i^{th}$ MAC SDU.

With reference to the first aspect, in some implementations of the first aspect, the method further includes: The first terminal device receives, on a first resource, feedback information from the N second terminal devices in the M second terminal devices. The feedback information indicates a receiving status of the first TB. An index $H_n$ of a feedback resource unit corresponding to the $n^{th}$ second terminal device in the N second terminal devices in the first resource satisfies $H_n=(T_{ID,n}+R_{ID,n})\bmod(F)$. $T_{ID,n}$ represents all or a part of bits of a first source address corresponding to data sent by the first terminal device to the $n^{th}$ second terminal device. Alternatively, $T_{ID,n}$ is 0. $R_{ID,n}$ represents all or a part of bits of a first destination address corresponding to the data sent by the first terminal device to the $n^{th}$ second terminal device. Alternatively, $R_{ID,n}$ represents a number of the $n^{th}$ second terminal device in the M second terminal devices. F is a total quantity of indexes of feedback resource units included in the first resource, n=1, 2, ..., or N, and mod() represents a modulo operation.

Based on the foregoing technical solution, each of the N second terminal devices sends feedback information on a corresponding feedback resource unit, so that the first terminal device may determine, based on the feedback information, whether each of the N second terminal devices correctly receives the first TB. This helps the first terminal device retransmit the first TB to a second terminal device that does not correctly receive the first TB.

According to a second aspect, a sidelink communication method is provided. The method may be performed by a terminal device, or may be performed by a component (for example, a chip or a circuit) of a terminal device. This is not limited. For ease of description, an example in which the method is performed by a second terminal device is used below for description.

An $n^{th}$ second terminal device in N second terminal devices receives first indication information from a first terminal device. The first indication information indicates whether a first TB includes a MAC SDU corresponding to an $m^{th}$ second terminal device in M second terminal devices. The M second terminal devices include the N second terminal devices. The first TB corresponds to at least two first source addresses and/or at least two first destination addresses. The at least two first source addresses correspond to at least two of the M second terminal devices. The at least two first destination addresses correspond to at least two of the M second terminal devices. Both M and N are positive integers. $N \leq M$, m=1, 2, ..., or M, and n=1, 2..., or N. The $n^{th}$ second terminal device receives the first TB from the first terminal device based on the first indication information.

For beneficial effects of the second aspect and implementations of the second aspect, refer to the descriptions of the first aspect.

With reference to the second aspect, in some implementations of the second aspect, the first indication information includes M bits in one-to-one correspondence with the M second terminal devices. An $m^{th}$ bit in the M bits indicates whether the first TB includes the MAC SDU corresponding to the $m^{th}$ second terminal device. The $m^{th}$ bit corresponds to the $m^{th}$ second terminal device.

With reference to the second aspect, in some implementations of the second aspect, the first indication information is carried in SCI associated with the first TB.

With reference to the second aspect, in some implementations of the second aspect, the method further includes: The $n^{th}$ second terminal device receives a second source address and/or a second destination address from the first terminal device. The second source address corresponds to the M second terminal devices. The second destination address corresponds to the M second terminal devices. All or a part of bits of the second source address and/or the second destination address are carried in the SCI associated with the first TB.

With reference to the second aspect, in some implementations of the second aspect, a part of bits of the second source address and/or the second destination address are carried in the SCI associated with the first TB, and a remaining part of bits of the second source address and/or the second destination address are carried in an SL-SCH subheader corresponding to the first TB.

With reference to the second aspect, in some implementations of the second aspect, the method further includes: The $n^{th}$ second terminal device receives first configuration information from the first terminal device. The first configuration information is used to configure at least one of the following: a correspondence between the M second terminal devices and the M bits, where the $m^{th}$ bit in the M bits indicates whether the first TB includes the MAC SDU corresponding to the $m^{th}$ second terminal device; or the second source address and/or the second destination address, where the second source address corresponds to the M second terminal devices, and the second destination address corresponds to the M second terminal devices.

With reference to the second aspect, in some implementations of the second aspect, the first TB includes K groups of MAC SDUs. The K groups of MAC SDUs correspond to the N second terminal devices. K is a positive integer, and $1 < K \leq N$. A subheader corresponding to a $1^{st}$ MAC SDU in a $k^{th}$ group of MAC SDUs in the K groups of MAC SDUs includes a first source address and/or a first destination address corresponding to the $k^{th}$ group of MAC SDUs. The first source address and/or the first destination address corresponding to the $k^{th}$ group of MAC SDUs correspond/corresponds to one or more of the N second terminal devices, and k=1, 2, ..., or K. The method further includes: The $n^{th}$ second terminal device determines, based on the first source address and/or the first destination address corresponding to the $k^{th}$ group of MAC SDUs, whether the $k^{th}$ group of MAC SDUs corresponds to the $n^{th}$ second terminal device.

With reference to the second aspect, in some implementations of the second aspect, a subheader corresponding to a $k_i^{th}$ MAC SDU in the $k^{th}$ group of MAC SDUs includes second indication information. The second indication information indicates whether a subheader corresponding to a MAC SDU after the $k_i^{th}$ MAC SDU includes a first source address and/or a first destination address corresponding to the MAC SDU after the $k_i^{th}$ MAC SDU, $k_i$=1, 2, ..., or $I_k$, and $I_k$ represents a quantity of MAC SDUs included in the $k^{th}$ group of MAC SDUs. Alternatively, the second indication information indicates that a subheader corresponding to a MAC SDU after the $k_i^{th}$ MAC SDU includes a first source address and/or a first destination address corresponding to the MAC SDU after the $k_i^{th}$ MAC SDU, $k_i=I_k$, and $I_k$ represents a quantity of MAC SDUs included in the $k^{th}$ group of MAC SDUs. The method further includes: The $n^{th}$ second terminal device determines, based on the second indication information included in the subheader corresponding to the $k_i^{th}$ MAC SDU, whether the subheader corresponding to the MAC SDU after the $k_i^{th}$ MAC SDU includes the first source address and/or the first destination address corresponding to the MAC SDU after the $k_i^{th}$ MAC SDU.

With reference to the second aspect, in some implementations of the second aspect, the first TB includes K groups of MAC SDUs. The K groups of MAC SDUs correspond to the N second terminal devices. K is a positive integer, and $1 < K \leq N$. The first TB includes K SL-SCH subheaders. The K SL-SCH subheaders are in one-to-one correspondence with the K groups of MAC SDUs. An SL-SCH subheader corresponding to a $k^{th}$ group of MAC SDUs in the K groups of MAC SDUs includes a first source address and/or a first destination address corresponding to the $k^{th}$ group of MAC SDUs. The first source address and/or the first destination corresponding to the $k^{th}$ group of MAC SDUs correspond/correspond to one or more of the N second terminal devices, and k=1, 2, ..., or K. A subheader corresponding to a $k_i^{th}$ MAC SDU in the $k^{th}$ group of MAC SDUs includes third indication information. The third indication information indicates whether an SL-SCH subheader corresponding to a $(k+1)^{th}$ group of MAC SDUs is included after the $k_i^{th}$ MAC SDU, $k_i$=1, 2, ..., or $I_k$, and $I_k$ represents a quantity of MAC SDUs included in the $k^{th}$ group of MAC SDUs. Alternatively, the third indication information indicates that an SL-SCH subheader corresponding to a $(k+1)^{th}$ group of MAC SDUs is included after the $k_i^{th}$ MAC SDU, $k_i$=$I_k$, and $I_k$ represents a quantity of MAC SDUs included in the $k^{th}$ group of MAC SDUs. The method further includes: The $n^{th}$ second terminal device determines, based on the first source address and/or the first destination address corresponding to the $k^{th}$ group of MAC SDUs, whether the $k^{th}$ group of MAC SDUs corresponds to the $n^{th}$ second terminal device. The $n^{th}$ second terminal device determines, based on the third indication information included in the subheader corresponding to the $k_i^{th}$ MAC SDU, whether an SL-SCH subheader corresponding to an $(n+1)^{th}$ group of MAC SDUs is included after the $k_i^{th}$ MAC SDU.

With reference to the second aspect, in some implementations of the second aspect, the method further includes: The $n^{th}$ second terminal device sends feedback information of the $n^{th}$ second terminal device to the first terminal device by using a feedback resource unit corresponding to the $n^{th}$ second terminal device in a first resource. The feedback information of the $n^{th}$ second terminal device indicates a receiving status of the first TB. An index $H_n$ of the feedback resource unit corresponding to the $n^{th}$ second terminal device in the first resource satisfies $H_n=(T_{ID,n}+R_{ID,n})mod(F)$. $T_{ID,n}$ represents all or a part of bits of a first source address corresponding to data sent by the first terminal device to the $n^{th}$ second terminal device. Alternatively, $T_{ID,n}$ is 0. $R_{ID,n}$ represents all or a part of bits of a first destination address corresponding to the data sent by the first terminal device to the $n^{th}$ second terminal device. Alternatively, $R_{ID,n}$ represents a number of the $n^{th}$ second terminal device in the M second terminal devices. F is a total quantity of indexes of feedback resource units included in the first resource, and mod() represents a modulo operation.

According to a third aspect, a sidelink communication method is provided. The method may be performed by a terminal device, or may be performed by a component (for example, a chip or a circuit) of a terminal device. This is not limited. For ease of description, an example in which the method is performed by a first terminal device is used below for description.

The method includes: The first terminal device generates first data. The first data includes K TBs. The K TBs are in one-to-one correspondence with K first source addresses and/or K first destination addresses. The K first source addresses correspond to N second terminal devices in M second terminal devices. The K first destination addresses correspond to the N second terminal devices. M, N, and K are all integers greater than 1, and $1<K\leq N\leq M$. The first terminal device sends the first data to the M second terminal devices by using a first PSSCH.

Based on the foregoing technical solution, when the first terminal device sends MAC SDUs to a plurality of second terminal devices, the first terminal device may multiplex the MAC SDUs sent to the plurality of second terminal devices into a plurality of TBs, concatenate the plurality of TBs into the first data, and then transmit the first data on one PSSCH resource, so that resource utilization can be improved.

With reference to the third aspect, in some implementations of the third aspect, the method further includes: The first terminal device sends first indication information to the M second terminal devices. The first indication information indicates whether the first data includes a MAC SDU corresponding to an $m^{th}$ second terminal device in the M second terminal devices, and m=1, 2, ..., or M.

In a possible implementation, the first indication information indicates whether the first data includes a TB corresponding to the $m^{th}$ second terminal device in the M second terminal devices.

Based on the foregoing technical solution, in addition, when the first terminal device sends MAC SDUs to some of the plurality of second terminal devices, the first terminal device may send the first indication information to the plurality of second terminal devices, to indicate whether the first data sent by the first terminal device includes a MAC SDU corresponding to each second terminal device, so that the plurality of second terminal devices may determine, based on the first indication information, whether to receive the first data. Further, if the first indication information indicates that the first data does not include a MAC SDU corresponding to a second terminal device, the second terminal device does not receive the first data, so that power consumption of the second terminal device can be reduced.

For example, the first indication information includes M bits in one-to-one correspondence with the M second terminal devices. An $m^{th}$ bit in the M bits indicates whether the first data includes the MAC SDU corresponding to the $m^{th}$ second terminal device.

For example, the first indication information is carried in SCI associated with the first data.

With reference to the third aspect, in some implementations of the third aspect, the method further includes: The first terminal device sends a second source address and/or a second destination address to the M second terminal devices. The second source address and the second destination address correspond to the M second terminal devices. All or a part of bits of the second source address and/or the second destination address are carried in the SCI associated with the first data.

Based on the foregoing technical solution, when the SCI associated with the first data carries the second source address and/or the second destination address, after receiving the SCI associated with the first data, the $m^{th}$ second terminal device in the M second terminal devices may determine, based on the second source address and/or the second destination address, that the SCI associated with the first data is SCI sent by the first terminal device to the $m^{th}$ second terminal device. Then, the $m^{th}$ second terminal device parses the SCI associated with the first data. The $m^{th}$ second terminal device may detect the first data on a PSSCH associated with the SCI associated with the first data. On the contrary, after receiving the SCI associated with the first data, another second terminal device other than the M second terminal devices determines, based on the second source address and/or the second destination address, that the SCI associated with the first data is not SCI sent by the first terminal device to the another second terminal device, so that the another second terminal device does not detect the first data on the PSSCH associated with the SCI associated with the first data.

For example, a part of bits of the second source address and/or the second destination address are carried in the SCI associated with the first data, and a remaining part of bits of the second source address and/or the second destination address are carried in an SL-SCH subheader corresponding to the K TBs.

With reference to the third aspect, in some implementations of the third aspect, the method further includes: The first terminal device sends first configuration information to the M second terminal devices. The first configuration information is used to configure at least one of the following: a correspondence between the M second terminal devices and the M bits, where the $m^{th}$ bit in the M bits indicates whether the first data includes the MAC SDU corresponding to the $m^{th}$ second terminal device in the M second terminal devices, and m=1, 2, ..., or M; or the second source address and/or the second destination address, where the second source address corresponds to the M second terminal devices, and the second destination address corresponds to the M second terminal devices.

With reference to the third aspect, in some implementations of the third aspect, different TBs in the K TBs have a same size, or different TBs in the K TBs correspond to a same quantity of resource units in a resource for sending the first data.

Based on the foregoing technical solution, the second terminal device is helped to determine a location of each of the K TBs in the first data.

With reference to the third aspect, in some implementations of the third aspect, the method further includes: The first terminal device sends fourth indication information to the N second terminal devices. The fourth indication information indicates one or more of the following: a size of each of the K TBs; a quantity of resource units corresponding to each of the K TBs in the resource for sending the first data; time domain resource location information and/or frequency domain resource location information corresponding to each of the K TBs in the resource for sending the first data; and coding and/or modulation information corresponding to each of the K TBs.

Based on the foregoing technical solution, the second terminal device is helped to determine the location of each of the K TBs in the first data, and/or parse a TB corresponding to the second terminal device in the K TBs.

With reference to the third aspect, in some implementations of the third aspect, the method further includes: The first terminal device receives, on a first resource, feedback information from the N second terminal devices. Feedback information of an $n^{th}$ second terminal device in the N second terminal devices indicates a receiving status of a TB corresponding to the $n^{th}$ second terminal device. An index $H_n$ of a feedback resource unit corresponding to the $n^{th}$ second terminal device in the first resource satisfies $H_n=(T_{ID,n}+R_{ID,n})$ mod(F). $T_{ID,n}$ represents all or a part of bits of a first source address corresponding to data sent by the first terminal device to the $n^{th}$ second terminal device. Alternatively, $T_{ID,n}$ is 0. $R_{ID,n}$ represents all or a part of bits of a first destination address corresponding to the data sent by the first terminal device to the $n^{th}$ second terminal device. Alternatively, $R_{ID,n}$ represents a number of the $n^{th}$ second terminal device in the M second terminal devices. F is a total quantity of indexes of feedback resource units included in the first resource, n=1, 2, ..., or N, and mod() represents a modulo operation.

Based on the foregoing technical solution, each of the N second terminal devices sends feedback information on a corresponding feedback resource unit, so that the first terminal device may determine, based on the feedback information, whether each of the N second terminal devices correctly receives a corresponding TB. This helps the first terminal device retransmit a corresponding TB to a second terminal device that does not correctly receive the corresponding TB.

With reference to the third aspect, in some implementations of the third aspect, the resource for sending the first data is located on one subchannel or one frequency domain resource scheduling unit.

According to a fourth aspect, a sidelink communication method is provided. The method may be performed by a terminal device, or may be performed by a component (for example, a chip or a circuit) of a terminal device. This is not limited. For ease of description, an example in which the method is performed by a second terminal device is used below for description.

An $n^{th}$ second terminal device in N second terminal devices receives first data from a first terminal device by using a first PSSCH. The first data includes K TBs. The K TBs correspond to K first source addresses and/or K first destination addresses. The K first source addresses correspond to the N second terminal devices. The K first destination addresses correspond to the N second terminal devices. N and K are integers greater than 1, K≤N, and n=1, 2, ..., or N. The $n^{th}$ second terminal device determines, based on a first source address and/or a first destination address corresponding to a $k^{th}$ TB in the K TBs, whether the $k^{th}$ TB corresponds to the $n^{th}$ second terminal device, where k=1, 2, ..., or K.

For beneficial effects of the fourth aspect and implementations of the fourth aspect, refer to the descriptions of the third aspect.

With reference to the fourth aspect, in some implementations of the fourth aspect, the method further includes: The $n^{th}$ second terminal device receives first indication information from the first terminal device. The first indication information indicates whether the first data includes a MAC SDU corresponding to an $m^{th}$ second terminal device in M second terminal devices. The M second terminal devices include the N second terminal devices. M is a positive integer, M≥N, and m=1, 2, ..., or M.

In a possible implementation, the first indication information indicates whether the first data includes a TB corresponding to the $m^{th}$ second terminal device in the M second terminal devices.

With reference to the fourth aspect, in some implementations of the fourth aspect, the first indication information includes M bits in one-to-one correspondence with the M second terminal devices. An $m^{th}$ bit in the M bits indicates whether the first data includes the MAC SDU corresponding to the $m^{th}$ second terminal device.

With reference to the fourth aspect, in some implementations of the fourth aspect, the first indication information is carried in SCI associated with the first data.

With reference to the fourth aspect, in some implementations of the fourth aspect, the method further includes: The $n^{th}$ second terminal device receives a second source address and/or a second destination address from the first terminal device. The second source address and the second destination address correspond to the M second terminal devices. The M second terminal devices include the N second terminal devices. All or a part of bits of the second source address and/or the second destination address are carried in the SCI associated with the first data. M is a positive integer, and M≥N.

With reference to the fourth aspect, in some implementations of the fourth aspect, a part of bits of the second source address and/or the second destination address are carried in the SCI associated with the first data, and a remaining part of bits of the second source address and/or the second destination address are carried in an SL-SCH subheader corresponding to the K TBs.

With reference to the fourth aspect, in some implementations of the fourth aspect, the method further includes: The $n^{th}$ second terminal device receives first configuration information from the first terminal device. The first configuration information is used to configure at least one of the following: a correspondence between the M second terminal devices and the M bits, where the $m^{th}$ bit in the M bits indicates whether the first data includes the MAC SDU corresponding to the $m^{th}$ second terminal device in the M second terminal devices, the M second terminal devices include the N second terminal devices, M is a positive integer, M≥N, and m=1, 2, ..., or M; or the second source address and/or the second destination address, where the second source address corresponds to the M second terminal devices, and the second destination address corresponds to the M second terminal devices.

With reference to the fourth aspect, in some implementations of the fourth aspect, different TBs in the K TBs have a same size, or different TBs in the K TBs correspond to a same quantity of resource units in a resource for sending the first data.

With reference to the fourth aspect, in some implementations of the fourth aspect, the method further includes: The $n^{th}$ second terminal device receives fourth indication information from the first terminal device. The fourth indication information indicates one or more of the following: a size of each of the K TBs; a quantity of resource units corresponding to each of the K TBs in the resource for sending the first data; time domain resource location information and/or frequency domain resource location information corresponding to each of the K TBs in the resource for sending the first data; and coding and/or modulation information corresponding to each of the K TBs.

With reference to the fourth aspect, in some implementations of the fourth aspect, the method further includes: The $n^{th}$ second terminal device sends feedback information of the $n^{th}$ second terminal device to the first terminal device by using a feedback resource unit corresponding to the $n^{th}$ second terminal device in a first resource. The feedback information of the $n^{th}$ second terminal device indicates a receiving status of a TB corresponding to the $n^{th}$ second terminal device. An index $H_n$ of the feedback resource unit corresponding to the $n^{th}$ second terminal device in the first resource satisfies $H_n=(T_{ID,n}+R_{ID,n})\bmod(F)$. $T_{ID,n}$ represents all or a part of bits of a first source address corresponding to data sent by the first terminal device to the $n^{th}$ second terminal device. Alternatively, $T_{ID,n}$ is 0. $R_{ID,n}$ represents all or a part of bits of a first destination address corresponding to the data sent by the first terminal device to the $n^{th}$ second terminal device. Alternatively, $R_{ID,n}$ represents a number of the $n^{th}$ second terminal device in the M second terminal devices. The M second terminal devices include the N second terminal devices. M is a positive integer, and M≥N. $F$ is a total quantity of indexes of feedback resource units included in the first resource, and mod() represents a modulo operation.

With reference to the fourth aspect, in some implementations of the fourth aspect, the resource for sending the first data is located on one subchannel or one frequency domain resource scheduling unit.

According to a fifth aspect, a communication apparatus is provided. The apparatus is configured to perform the method in any one of the possible implementations of the first aspect to the fourth aspect. Specifically, the apparatus may include a unit and/or a module configured to perform the method in any one of the first aspect and the possible implementations of the first aspect, may include a unit and/or a module configured to perform the method in any one of the second aspect and the possible implementations of the second aspect, may include a unit and/or a module configured to perform the method in any one of the third aspect and the possible implementations of the third aspect, or may include a unit and/or a module configured to perform the method in any one of the fourth aspect and the possible implementations of the fourth aspect, for example, a processing unit and/or a communication unit.

In an implementation, the apparatus is a device (for example, a first terminal device or a second terminal device). When the apparatus is the device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a device (for example, a first terminal device or a second terminal device). When the apparatus is the chip, the chip system, or the circuit used in the device, the communication unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to a sixth aspect, a communication apparatus is provided. The apparatus includes at least one processor, configured to execute a computer program or instructions stored in a memory, to perform the method in any one of the first aspect and the possible implementations of the first aspect, perform the method in any one of the second aspect and the possible implementations of the second aspect, perform the method in any one of the third aspect and the possible implementations of the third aspect, or perform the method in any one of the fourth aspect and the possible implementations of the fourth aspect. Optionally, the apparatus further includes the memory, configured to store the computer program or the instructions. Optionally, the apparatus further includes a communication interface, and the processor reads, through the communication interface, the computer program or the instructions stored in the memory.

In an implementation, the apparatus is a device (for example, a first terminal device or a second terminal device).

In another implementation, the apparatus is a chip, a chip system, or a circuit used in a device (for example, a first terminal device or a second terminal device).

According to a seventh aspect, this application provides a processor, configured to perform the method provided in the first aspect, configured to perform the method provided in the second aspect, configured to perform the method provided in the third aspect, or configured to perform the method provided in the fourth aspect.

Sending, obtaining/receiving, and other operations related to the processor may be understood as output, receiving/input, and other operations performed by the processor, or sending and receiving operations performed by a radio frequency circuit and an antenna, unless otherwise specified or the operations conflict with actual functions or internal logic of the operations in related descriptions. This is not limited in this application.

According to an eighth aspect, a computer-readable storage medium is provided. The computer-readable medium stores program code executed by a device. The program code is used to perform the method in any one of the first aspect and the possible implementations of the first aspect, is used to perform the method in any one of the second aspect and the possible implementations of the second aspect, is used to perform the method in any one of the third aspect and the possible implementations of the third aspect, or is used to perform the method in any one of the fourth aspect and the possible implementations of the fourth aspect.

According to a ninth aspect, a computer program product including instructions is provided. When the computer program product is run on a computer, the computer is enabled to perform the method in any one of the first aspect and the possible implementations of the first aspect, the computer is enabled to perform the method in any one of the second aspect and the possible implementations of the second aspect, the computer is enabled to perform the method in any one of the third aspect and the possible implementations of the third aspect, or the computer is enabled to perform the method in any one of the fourth aspect and the possible implementations of the fourth aspect.

According to a tenth aspect, a communication system is provided, including a first terminal device and a second terminal device. The first terminal device is configured to perform the method in any one of the first aspect and the possible implementations of the first aspect, or is configured to perform the method in any one of the third aspect and the possible implementations of the third aspect. The second terminal device is configured to perform the method in any one of the second aspect and the possible implementations of the second aspect, or is configured to perform the method in any one of the fourth aspect and the possible implementations of the fourth aspect.

## BRIEF DESCRIPTION OF DRAWINGS

FIG. 1 is a diagram of an architecture of a communication system to which an embodiment of this application is applied;

FIG. 2 is a schematic flowchart of a method according to an embodiment of this application;

FIG. 3 is a diagram of a structure of a TB according to an embodiment of this application;

FIG. 4 is a diagram of another structure of a TB according to an embodiment of this application;

FIG. 5 is a diagram of another structure of a TB according to an embodiment of this application;

FIG. 6 is a schematic flowchart of a method according to another embodiment of this application;

FIG. 7 is a diagram of a structure of data according to an embodiment of this application;

FIG. 8 is a schematic flowchart of a method according to another embodiment of this application;

FIG. 9 is a diagram of a resource configuration manner according to an embodiment of this application;

FIG. 10 is a schematic flowchart of a method according to another embodiment of this application;

FIG. 11 is a diagram of a resource configuration manner according to an embodiment of this application;

FIG. 12 is a diagram of a communication apparatus 1200 according to an embodiment of this application;

FIG. 13 is a diagram of another communication apparatus 1300 according to an embodiment of this application; and

FIG. 14 is a diagram of a chip system 1400 according to an embodiment of this application.

## DESCRIPTION OF EMBODIMENTS

The following describes technical solutions of this application with reference to accompanying drawings.

The technical solutions provided in embodiments of this application may be applied to various communication systems, for example, a 5th generation (5th generation, 5G) system or a new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation (6th generation, 6G) mobile communication system. The technical solutions provided in this application may be further applied to sidelink (sidelink, SL) communication, vehicle-to-everything (vehicle-to-everything, V2X) communication, machine to machine (machine to machine, M2M), machine type communication (machine type communication, MTC), an internet of things (internet of things, IoT) communication system, or another communication system. In an example, V2X may include vehicle-to-vehicle (vehicle-to-vehicle, V2V), vehicle-to-pedestrian (vehicle-to-pedestrian, V2P), and vehicle-to-infrastructure (vehicle-to-infrastructure, V2I). The infrastructure is, for example, a roadside unit (road side unit, RSU) or a network device.

A terminal device in embodiments of this application includes various devices having a wireless communication function, and may be configured to be connected to a person, an object, a machine, and the like. The terminal device may be widely used in various scenarios, for example, cellular communication, SL communication, V2X communication, peer to peer (peer to peer, P2P), M2M, MTC, IoT, virtual reality (virtual reality, VR), augmented reality (augmented reality, AR), industrial control, autonomous driving, telemedicine, a smart grid, smart furniture, a smart office, a smart wearable, smart transportation, a smart city, an uncrewed aerial vehicle, robot, remote sensing, passive sensing, positioning, navigation and tracking, and autonomous delivery. The terminal device may be a terminal in any one of the foregoing scenarios, for example, an MTC terminal or an IoT terminal. The terminal device may be: a user equipment (user equipment, UE) of the 3rd generation partnership project (3rd generation partnership project, 3GPP) standard, a terminal (terminal), a fixed device, a mobile station (mobile station) device or a mobile device, a subscriber unit (subscriber unit), a handheld device, an in-vehicle device, a wearable device, a cellular phone (cellular phone), a smartphone (smartphone), a session initiation protocol (session initiation protocol, SIP) phone, a wireless data card, a personal digital assistant (personal digital assistant, PDA), a computer, a tablet computer, a notebook computer, a wireless modem, a handset (handset), a laptop computer (laptop computer), a computer having a wireless transceiver function, a smart book, a vehicle, a satellite, a global positioning system (global positioning system, GPS) device, a target tracking device, a flight device (such as an uncrewed aerial vehicle, a helicopter, a multicopter, a quadcopter, or an aircraft), a ship, a remote control device, a smart home device, or an industrial device; an apparatus disposed in the foregoing device (for example, a communication module, a modem, or a chip in the foregoing device); or another processing device connected to a wireless modem.

It should be understood that in some scenarios, the terminal device may alternatively be configured to serve as a base station. For example, the terminal device may serve as a scheduling entity, and provide a sidelink signal between terminal devices in a scenario such as V2X, SL, or P2P.

In embodiments of this application, an apparatus configured to implement a function of the terminal device, that is, a terminal apparatus, may be the terminal device, or may be an apparatus that can support the terminal device in implementing the function, for example, a chip system or a chip, where the apparatus may be mounted in the terminal device. In embodiments of this application, the chip system may include a chip, or may include a chip and another discrete component.

The terminal device may be deployed on the land, including an indoor device, an outdoor device, a handheld device, or an in-vehicle device; may be deployed on the water; or may be deployed on an aircraft, a balloon, and a satellite in control. A scenario in which the terminal device is located is not limited in embodiments of this application. In addition, the network device may be a hardware device, or may be a software function run on dedicated hardware or a software function run on general-purpose hardware, for example, a virtual function instantiated on a platform (for example, a cloud platform) or an entity including a dedicated or general-purpose hardware device and a software function. A specific form of the terminal device is not limited in this application.

The following describes the technical solutions in embodiments of this application with reference to the accompanying drawings in embodiments of this application. In the descriptions of this application, unless otherwise specified, "/" indicates that associated objects are in an "or" relationship. For example, A/B may represent A or B. In this application, "and/or" describes only an association relationship between the associated objects and represents that three relationships may exist. For example, A and/or B may indicate: Only A exists, both A and B exist, and only B exists, where A and B may be singular or plural. In addition, in the descriptions of this application, "a plurality of" means two or more than two unless otherwise specified. "At least one of the following items (pieces)" or a similar expression indicates any combination of these items, including a single item (piece) or any combination of a plurality of items (pieces). For example, at least one item (piece) of a, b, or c may represent: a, b, c, a-b, a-c, b-c, or a-b-c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

In addition, a network architecture and a service scenario described in embodiments of this application are intended to describe the technical solutions in embodiments of this application more clearly, and do not constitute a limitation on the technical solutions provided in embodiments of this application. A person of ordinary skill in the art may know that with the evolution of the network architecture and the emergence of new service scenarios, the technical solutions provided in embodiments of this application are also applicable to similar technical problems.

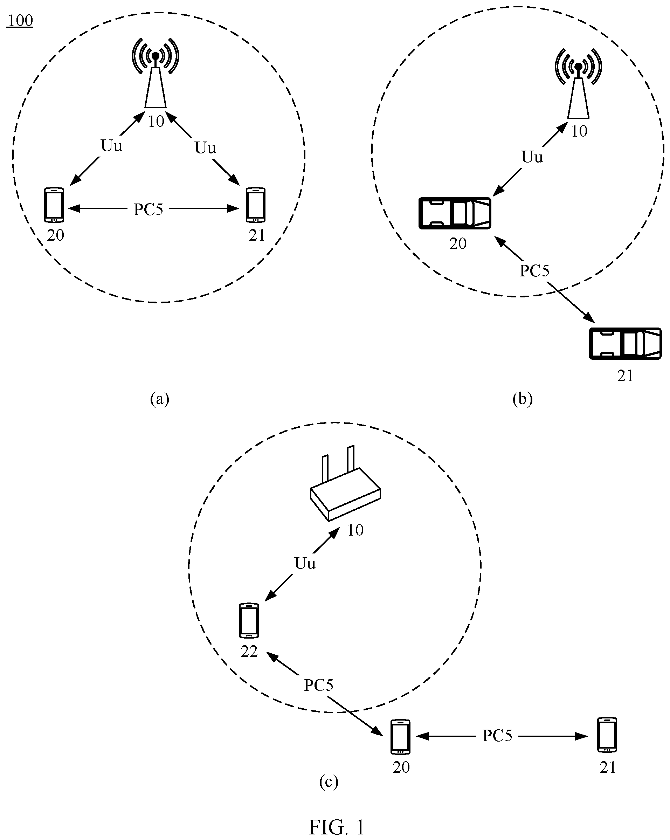

FIG. 1 is a diagram of a communication system 100 to which an embodiment of this application is applicable.

A communication system 100 shown in (a) in FIG. 1 includes a network device 10, a terminal device 20, and a terminal device 21. Both the terminal device 20 and the terminal device 21 are within a coverage area of the network device 10. The network device 10 communicates with the terminal device through a Uu (U represents a user to network interface (user to network interface), and u represents universal (universal)) interface. The terminal device 20 communicates with the terminal device 21 through a proximity-based service communication 5 (proximity-based service communication 5, PC5) interface. A communication system 100 shown in (b) in FIG. 1 includes a network device 10, a terminal device 20, and a terminal device 21. The terminal device 20 is within a coverage area of the network device 10, and the terminal device 21 is outside the coverage area of the network device 10. A communication system 100 shown in (c) in FIG. 1 includes a network device 10, a terminal device 20, a terminal device 21, and a terminal device 22. Neither the terminal device 20 nor the terminal device 21 is within a coverage area of the network device 10, and the terminal device 22 is within the coverage area of the network device 10.

In scenarios shown in (a) and (b) in FIG. 1, the terminal device 20 may communicate with the terminal device 21 by using a resource scheduled by the network device; or the terminal device 20 may perform self-resource selection, that is, select a resource from a resource pool, to communicate with the terminal device 21. In a scenario shown in (c) in FIG. 1, because both the terminal device 20 and the terminal device 21 are in an area without network coverage, the terminal device 20 and the terminal device 21 may communicate in a self-resource selection manner. A resource for communication between the terminal device 20 and the terminal device 21 may be a licensed spectrum resource, or may be an unlicensed spectrum resource.

It should be understood that quantities of terminal devices and network devices shown in FIG. 1 are merely examples, and quantities of terminal devices and network devices in the communication system are not limited in this application.

Different from downlink (downlink, DL) communication and uplink (uplink, UL) communication in a cellular network, sidelink (sidelink, SL) communication may support direct communication between terminal devices, that is, user data is directly transmitted between UEs. This avoids relay transmission of the user data through a network in cellular communication, so that a transmission delay can be reduced, and a network load can be relieved.

A time-frequency resource set for SL communication may be referred to as an SL resource pool. For example, the SL resource pool includes a plurality of slots (slots) in time domain, and includes a plurality of subchannels (subchannels) in frequency domain. In an existing SL protocol, a slot is a minimum time domain resource scheduling unit, a subchannel is a minimum frequency domain resource scheduling unit, and each subchannel includes one physical sidelink control channel (physical sidelink control channel, PSCCH) candidate resource location. A transmitting UE sends data by using a physical sidelink shared channel (physical sidelink shared channel, PSSCH), and sends sidelink control information (sidelink control information, SCI) by using a PSCCH associated with the PSSCH. A receiving UE may detect the PSCCH on a PSCCH candidate resource location of each subchannel, and if detecting the PSCCH on a subchannel, may detect, based on the indication information SCI, the PSSCH associated with the PSCCH.

A large quantity of small packet services are transmitted in an industrial internet. For example, in a mobile control (mobile control) scenario, one programmable logic controller (programmable logic controller, PLC) needs to exchange a large quantity of small packet services with a plurality of sensors/actuators (sensors/actuators, S/A), and a size of a small packet service is, for example, 20 to 50 bytes (bytes). In an existing SL resource pool configuration, one subchannel includes at least 10 physical resource blocks (physical resource block, PRB), and a quantity of resources that need to be occupied by the small packet service may be far less than a quantity of resources included in each subchannel. Therefore, scheduling a transmission resource for each small packet service in a unit of a subchannel causes low resource utilization, and independently scheduling transmission of each small packet causes high SCI overheads. If a quantity of PRBs included in each subchannel is directly reduced, although flexibility of resource scheduling can be improved, an additional problem is caused. For example, an increase in a quantity of subchannels leads to an increase in complexity of blind detection of a PSCCH, and an increase in a quantity of symbols occupied by the PSCCH leads to an increase in a decoding delay.

In view of this, an embodiment of this application provides a sidelink communication method, to improve resource utilization of a small packet transmission service.

It should be noted that M second terminal devices mentioned in this embodiment of this application are terminal devices in a logical sense, that is, different second terminal devices are distinguished by using a group of identifiers corresponding to the second terminal device. The group of identifiers corresponding to the second terminal device is an identifier corresponding to a connection (including a unicast connection, a multicast connection, or a broadcast connection) established between the second terminal device and a first terminal device, an identifier determined by the second terminal device and a first terminal device through negotiation, an identifier configured by a network device, or the like. The group of identifiers may include one source address and/or one destination address. It may be understood that because a plurality of connections may be established between substantive terminal devices of each pair, a plurality of second terminal devices in the M second terminal devices may correspond to a same substantive terminal device. For example, a second terminal device #1 and a second terminal device #2 in the M second terminal devices correspond to a same substantive terminal device. The second terminal device #1 establishes a unicast connection #1 to the first terminal device. The second terminal device #1 corresponds to a group of unicast identifiers #1 corresponding to the unicast connection #1. The second terminal device #2 in the M second terminal devices establishes a unicast connection #2 to the first terminal device. The second terminal device #2 corresponds to a group of unicast identifiers #2 corresponding to the unicast connection #2. Because the unicast identifiers #1 are different from the unicast identifiers #2, the second terminal device #1 and the second terminal device #2 are two different terminal devices in the logical sense.

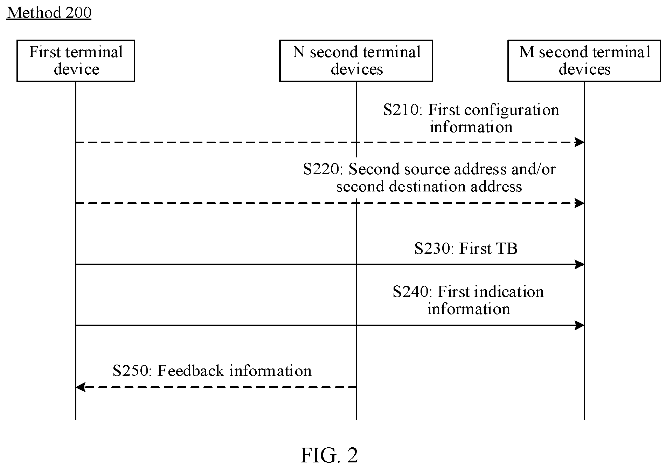

FIG. 2 is a schematic flowchart of a sidelink communication method 200 according to an embodiment of this application. As shown in FIG. 2, the method 200 may include the following steps.

S210: A first terminal device sends first configuration information to M second terminal devices.

Correspondingly, each of the M second terminal devices receives the first configuration information from the first terminal device. M is an integer greater than 1.

Optionally, the first terminal device establishes a unicast connection, for example, a unicast radio resource control (radio resource control, RRC) connection, to each of the M second terminal devices. A unicast connection between the first terminal device and an $m^{th}$ second terminal device corresponds to a group of unicast identifiers, and the group of unicast identifiers includes one first source address and/or one first destination address. Alternatively, the first terminal device performs multicast or broadcast communication with one or more of the M second terminal devices. The first terminal device and the one or more second terminal devices correspond to a group of multicast identifiers or a group of broadcast identifiers. The group of multicast identifiers includes one first source address and/or one first destination address. The group of broadcast identifiers includes one first source address and/or one first destination address. Herein, m=1, 2, ..., or M, where m=1, 2, ..., or M indicates that a value of m is each value in 1, 2, ..., and M, or in other words, the value of m traverses each integer value greater than or equal to 1 and less than or equal to M. Alternatively, m=0, 1, 2, ..., or M-1, where m=0, 1, 2, ..., or M-1 indicates that a value of m is each value in 0, 1, 2, ..., and M-1, or in other words, the value of m traverses each integer value greater than or equal to 0 and less than or equal to M-1.

For example, a first source address corresponding to the $m^{th}$ second terminal device is a source address corresponding to data sent by the first terminal device to the $m^{th}$ second terminal device, for example, a layer 2 (layer 2, L2) source address or a layer 1 (layer 1, L1) source address. A first destination address corresponding to the $m^{th}$ second terminal device is a destination address corresponding to the data sent by the first terminal device to the $m^{th}$ second terminal device, for example, a layer 2 destination address or a layer 1 destination address.

The M second terminal devices include all terminal devices that have established connections (including one or more of a unicast connection, a multicast connection, and a broadcast connection) to the first terminal device or that have a communication requirement. Alternatively, the M second terminal devices include some terminal devices that have established connections to the first terminal device or that have a communication requirement. For example, the M second terminal devices include a terminal device that may be configured to receive a small packet service in all terminal devices that have established connections to the first terminal device. For example, a size of the small packet service is 20 to 50 bytes.

The first configuration information is used to configure at least one of the following: a correspondence between the M second terminal devices and M bits, or a second source address and/or a second destination address.

The correspondence between the M second terminal devices and the M bits is a one-to-one correspondence. To be specific, one second terminal device in the M second terminal devices corresponds to one bit in the M bits, and different second terminal devices in the M second terminal devices correspond to different bits. For example, an $m^{th}$ bit in the M bits corresponds to the $m^{th}$ second terminal device in the M second terminal devices, and the $m^{th}$ bit indicates whether a transport block (transport block, TB) (for example, a first TB below) sent by the first terminal device includes a media access control (media access control, MAC) service data unit (service data unit, SDU) corresponding to the $m^{th}$ second terminal device. The MAC SDU corresponding to the $m^{th}$ second terminal device is a MAC SDU sent by the first terminal device to the $m^{th}$ second terminal device, or in other words, is a MAC SDU that needs to be received by the $m^{th}$ second terminal device. For example, if a value of a bit #m in the M bits is a first value, the bit #m indicates that the TB sent by the first terminal device includes the MAC SDU corresponding to the $m^{th}$ second terminal device; or if a value of a bit #m is a second value, the bit #m indicates that the TB sent by the first terminal device does not include the MAC SDU corresponding to the $m^{th}$ second terminal device. The bit #m is the $m^{th}$ bit in the M bits. The first value is 1, and the second value is 0. Alternatively, the first value is 0, and the second value is 1.

The second source address corresponds to the M second terminal devices, and the second destination address corresponds to the M second terminal devices. The M second terminal devices are considered as a terminal device group, and the second source address and/or the second destination address may be referred to as a multicast identifier corresponding to the terminal device group.

It should be noted that if the correspondence between the M bits and the M second terminal devices is preconfigured, the first configuration information may not indicate the correspondence between the M bits and the M second terminal devices. Alternatively, if the first terminal device does not need to configure the correspondence between the M bits and the M second terminal devices for the M second terminal devices, the first configuration information may not indicate the correspondence between the M bits and the M second terminal devices.

It should be further noted that if the second source address is preconfigured, the first configuration information may not indicate the second source address. Alternatively, if the first terminal device does not need to configure the second source address for the M second terminal devices, the first configuration information may not indicate the second source address.

It should be further noted that if the second destination address is preconfigured, the first configuration information may not indicate the second destination address. Alternatively, if the first terminal device does not need to configure the second destination address for the M second terminal devices, the first configuration information may not indicate the second destination address.

It should be further noted that S210 is an optional step. For example, if the first terminal device configures the correspondence between the M bits and the M second terminal devices, the second source address, and the second destination address for the M second terminal devices before the method 200 is performed, S210 may not be performed in the method 200. For another example, if the first terminal device does not need to configure the correspondence between the M bits and the M second terminal devices, the second source address, and the second destination address for the M second terminal devices, S210 may not be performed in the method 200.

S220: The first terminal device sends the second source address and/or the second destination address to the M second terminal devices.

Correspondingly, each of the M second terminal devices receives the second source address and/or the second destination address from the first terminal device.

The second source address and/or the second destination address sent by the first terminal device to the M second terminal devices are/is carried in SCI associated with the first TB. For ease of description, the SCI associated with the first TB is denoted as first SCI below. The first SCI may be first-order SCI. In other words, the first SCI is SCI sent by the first terminal device to the M second terminal devices by using a PSCCH. Alternatively, the first SCI may be second-order SCI. In other words, the first SCI may be SCI sent by the first terminal device to the M second terminal devices by using a PSSCH. Alternatively, the first SCI may be SCI newly defined in a future protocol or standard. It may be understood that the first SCI carries scheduling information of the first TB, and the scheduling information is used to schedule a resource used to transmit the first TB and/or information used to demodulate or decode the first TB. For more descriptions of the first TB, refer to the following S230.

For example, the first terminal device sends all bits of the second source address and/or all bits of the second destination address to the M second terminal devices.

For another example, the first terminal device sends all bits of the second source address and/or a part of bits of the second destination address (for example, denoted as first bits of the second destination address) to the M second terminal devices. The first bits of the second destination address may be S consecutive high bits in all bits of the second destination address, or may be L consecutive low bits. Both S and L are positive integers.

For another example, the first terminal device sends a part of bits of the second source address (for example, denoted as first bits of the second source address) and/or all bits of the second destination address to the M second terminal devices. The first bits of the second source address may be R consecutive high bits in all bits of the second source address, or may be T consecutive low bits. Both R and T are positive integers.

For another example, the first terminal device sends a part of bits of the second source address and/or a part of bits of the second destination address to the M second terminal devices.

It should be understood that when the first SCI sent by the first terminal device to the M second terminal devices carries the second source address and/or the second destination address, after receiving the first SCI, the $m^{th}$ second terminal device in the M second terminal devices may determine, based on the second source address and/or the second destination address in the first SCI, that the first SCI is SCI sent by the first terminal device to the $m^{th}$ second terminal device. Then, the $m^{th}$ second terminal device parses the first SCI. The $m^{th}$ second terminal device may detect the first TB on the PSSCH associated with the first SCI. If a terminal device (for example, a third terminal device) other than the M second terminal devices receives the first SCI, the terminal device may determine, based on the second source address and/or the second destination address in the first SCI, that the first SCI is not SCI sent by the first terminal device to the third terminal device, so that the third terminal device does not parse the first SCI, and does not detect the first TB on the PSSCH associated with the first SCI.

It should be noted that S220 is an optional step. For example, if the M second terminal devices include all terminal devices that establish connections to the first terminal device, the first terminal device may not send the second source address and/or the second destination address to the M second terminal devices, that is, the first SCI sent by the first terminal device to the M second terminal devices may not carry the second source address and/or the second destination address. For another example, if a terminal device that receives and parses the first SCI is not limited, the first terminal device may not send the second source address and/or the second destination address to the M second terminal devices.

S230: The first terminal device sends the first TB to the M second terminal devices.

The first TB corresponds to at least two first source addresses and/or at least two first destination addresses. For example, the first TB corresponds to the at least two first source addresses, and corresponds to the at least two first destination addresses. For another example, the first TB corresponds to one first source address, and corresponds to the at least two first destination addresses. For another example, the first TB corresponds to the at least two first source addresses, and corresponds to one first destination address. That the first TB corresponds to the at least two first source addresses means that the first TB includes at least two groups of MAC SDUs corresponding to the at least two first source addresses. That the first TB corresponds to the at least two first destination addresses means that the first TB includes at least two groups of MAC SDUs corresponding to the at least two first destination addresses.

The at least two first source addresses correspond to at least two of the M second terminal devices, or in other words, the at least two first source addresses correspond to connections between the at least two second terminal devices and the first terminal device. The correspondence between the at least two first source addresses and the at least two of the M second terminal devices may include a one-to-one relationship and/or a one-to-many relationship. For example, the at least two first source addresses are in one-to-one correspondence with the at least two of the M second terminal devices. For another example, one of the at least two first source addresses corresponds to one of the M second terminal devices, and another of the at least two first source addresses corresponds to two of the M second terminal devices.

The at least two first destination addresses correspond to at least two of the M second terminal devices, or in other words, the at least two first destination addresses correspond to connections between the at least two second terminal devices and the first terminal device. The correspondence between the at least two first destination addresses and the at least two of the M second terminal devices may include a one-to-one relationship and/or a one-to-many relationship. For example, the at least two first destination addresses are in one-to-one correspondence with the at least two of the M second terminal devices. For another example, one of the at least two first destination addresses corresponds to one of the M second terminal devices, and another of the at least two first destination addresses corresponds to two of the M second terminal devices.

Optionally, if S220 is performed in the method 200, and the first terminal device sends the first bits of the second source address and/or the first bits of the second destination address to the M second terminal devices in S220, the first TB includes a second bit of the second source address and/or a second bit of the second destination address. The second bit of the second source address includes a bit other than the first bits of the first source address in all the bits of the second source address. The second bit of the second destination address includes a bit other than the first bits of the first destination address in all the bits of the second destination address. The second bit of the second source address and/or the second bit of the second destination address that are/is included in the first TB are/is carried in a sidelink shared channel (sidelink shared channel, SL-SCH) subheader corresponding to the first TB.

The first TB includes K groups of MAC SDUs. The K groups of MAC SDUs correspond to N second terminal devices in the M second terminal devices. Both K and N are positive integers, $N \leq M$, and $K \leq N$. For example, the K groups of MAC SDUs are in one-to-one correspondence with the N second terminal devices. In this case, K=N. For another example, the K groups of MAC SDUs include at least one group of MAC SDUs, and each group of MAC SDUs in the at least one group of MAC SDUs corresponds to a plurality of second terminal devices. In this case, K<N. It should be noted that different groups of MAC SDUs in the K groups of MAC SDUs correspond to different second terminal devices.

It should be understood that in this embodiment of this application, grouping MAC SDUs included in the first TB into the K groups is merely logical division, and there is no actual grouping operation.

A $k^{th}$ group of MAC SDUs in the K groups of MAC SDUs includes at least one MAC SDU. Different MAC SDUs included in the $k^{th}$ group of MAC SDUs correspond to a same first source address and a same first destination address. Herein, k=1, 2, ..., or K, where k=1, 2, ..., or K indicates that a value of k is each value in 1, 2, ..., and K, or in other words, the value of k traverses each integer value greater than or equal to 1 and less than or equal to K.

The $k^{th}$ group of MAC SDUs and a $k'^{th}$ group of MAC SDUs in the K groups of MAC SDUs correspond to different first source addresses and/or first destination addresses. Herein, k'=1, 2, ..., or K, and k'≠k, where k'=1, 2, ..., or K indicates that a value of k' is each value in 1, 2, ..., and K, or in other words, the value of k' traverses each integer value greater than or equal to 1 and less than or equal to K. When the $k^{th}$ group of MAC SDUs and the $k'^{th}$ group of MAC SDUs correspond to different first source addresses, a first source address corresponding to any MAC SDU in the $k^{th}$ group of MAC SDUs is different from a first source address corresponding to any MAC SDU in the $k'^{th}$ group of MAC SDUs. When the $k^{th}$ group of MAC SDUs and the $k'^{th}$ group of MAC SDUs correspond to different first destination addresses, a first destination address corresponding to any MAC SDU in the $k^{th}$ group of MAC SDUs is different from a first destination address corresponding to any MAC SDU in the $k'^{th}$ group of MAC SDUs.

The first TB further includes a first source address and/or a first destination address corresponding to each of the K groups of MAC SDUs. A first source address and/or a first destination address corresponding to the $k^{th}$ group of MAC SDUs correspond/corresponds to each MAC SDU in the $k^{th}$ group of MAC SDUs. The following describes a manner in which the first TB carries the first source address and/or the first destination address corresponding to each of the K groups of MAC SDUs.

In a possible implementation, a subheader (subheader) corresponding to a $1^{st}$ MAC SDU in the $k^{th}$ group of MAC SDUs includes the first source address and/or the first destination address corresponding to the $k^{th}$ group of MAC SDUs. The first source address and/or the first destination address corresponding to the $k^{th}$ group of MAC SDUs correspond/corresponds to one or more of the N second terminal devices, or in other words, the $k^{th}$ group of MAC SDUs corresponds to the one or more of the N second terminal devices. In the first TB, the $1^{st}$ MAC SDU included in the $k^{th}$ group of MAC SDUs is located before a remaining MAC SDU included in the $k^{th}$ group of MAC SDUs.

Correspondingly, after receiving the first TB, an $n^{th}$ second terminal device in the N second terminal devices may parse the subheader corresponding to the $1^{st}$ MAC SDU in the $k^{th}$ group of MAC SDUs to obtain the first source address and/or the first destination address corresponding to the $k^{th}$ group of MAC SDUs, to determine, based on the first source address and/or the first destination address corresponding to the $k^{th}$ group of MAC SDUs, whether the $k^{th}$ group of MAC SDUs corresponds to the $n^{th}$ second terminal device. For example, if the first source address and/or the first destination address corresponding to the $k^{th}$ group of MAC SDUs correspond/corresponds to the $n^{th}$ second terminal device, the $n^{th}$ second terminal device determines that the $k^{th}$ group of MAC SDUs corresponds to the $n^{th}$ second terminal device. Then, the $n^{th}$ second terminal device processes the MAC SDU in the $k^{th}$ group of MAC SDUs. For example, the $n^{th}$ second terminal device submits the MAC SDU in the $k^{th}$ group of MAC SDUs to an RLC layer.

If the first source address and/or the first destination address corresponding to the $k^{th}$ group of MAC SDUs do/does not correspond to the $n^{th}$ second terminal device, the $n^{th}$ second terminal device determines that the $k^{th}$ group of MAC SDUs does not correspond to the $n^{th}$ second terminal device. Then, the $n^{th}$ second terminal device does not process the $k^{th}$ group of MAC SDUs, or discards the $k^{th}$ group of MAC SDUs. Herein, n=1, 2, ..., or N, where n=1, 2, ..., or N indicates that a value of n is each value in 1, 2, ..., and N, or in other words, the value of n traverses each integer value greater than or equal to 1 and less than or equal to N.

For example, if the first source address corresponding to the $k^{th}$ group of MAC SDUs is the same as a first source address corresponding to a $(k-1)^{th}$ group of MAC SDUs, the subheader corresponding to the $1^{st}$ MAC SDU in the $k^{th}$ group of MAC SDUs may not include the first source address corresponding to the $k^{th}$ group of MAC SDUs. The $(k-1)^{th}$ group of MAC SDUs in the first TB is located before the $k^{th}$ group of MAC SDUs.

Correspondingly, after the $n^{th}$ second terminal device receives the first TB, if the subheader corresponding to the $1^{st}$ MAC SDU in the $k^{th}$ group of MAC SDUs does not include the first source address corresponding to the $k^{th}$ group of MAC SDUs, the $n^{th}$ second terminal device may determine that the first source address corresponding to the $k^{th}$ group of MAC SDUs is the same as the first source address corresponding to the $(k-1)^{th}$ group of MAC SDUs.

For example, if the first destination address corresponding to the $k^{th}$ group of MAC SDUs is the same as a first destination address corresponding to a $(k-1)^{th}$ group of MAC SDUs, the subheader corresponding to the $1^{st}$ MAC SDU in the $k^{th}$ group of MAC SDUs may not include the first destination address corresponding to the $k^{th}$ group of MAC SDUs.

Correspondingly, after the $n^{th}$ second terminal device receives the first TB, if the subheader corresponding to the $1^{st}$ MAC SDU in the $k^{th}$ group of MAC SDUs does not include the first destination address corresponding to the $k^{th}$ group of MAC SDUs, the $n^{th}$ second terminal device may determine that the first destination address corresponding to the $k^{th}$ group of MAC SDUs is the same as the first destination address corresponding to the $(k-1)^{th}$ group of MAC SDUs.

Optionally, a subheader corresponding to another MAC SDU other than the $1^{st}$ MAC SDU in the $k^{th}$ group of MAC SDUs may also include the first source address and/or the first destination address corresponding to the $k^{th}$ group of MAC SDUs.

Optionally, a subheader corresponding to a $k_i^{th}$ MAC SDU in the $k^{th}$ group of MAC SDUs includes second indication information. The second indication information indicates whether a subheader corresponding to a MAC SDU after the $k_i^{th}$ MAC SDU (the MAC SDU after the $k_i^{th}$ MAC SDU is denoted as a MAC SDU $\#k_i'$ below) includes a first source address and/or a first destination address corresponding to the MAC SDU $\#k_i'$, $k_i$=1, 2, ..., or $l_k$, and

$l_k$ represents a quantity of MAC SDUs included in the $k^{th}$ group of MAC SDUs. When $k_i$= 1, 2, ..., or $l_k$, it indicates that a subheader corresponding to each MAC SDU in the $k^{th}$ group of MAC SDUs includes second indication information. Optionally, the second indication information is carried in a reserved bit of the subheader corresponding to the $k_i^{th}$ MAC SDU.

Correspondingly, after receiving the first TB, the $n^{th}$ second terminal device may determine, based on the second indication information included in the subheader corresponding to the $k_i^{th}$ MAC SDU in the $k^{th}$ group of MAC SDUs, whether the subheader corresponding to the MAC SDU $\#k_i'$ includes the first source address and/or the first destination address corresponding to the MAC SDU $\#k_i'$. If the $n^{th}$ second terminal device determines that the subheader corresponding to the MAC SDU $\#k_i'$ includes the first source address and/or the first destination address corresponding to the MAC SDU $\#k_i'$, the $n^{th}$ second terminal device parses the subheader corresponding to the MAC SDU $\#k_i'$ to obtain the first source address and/or the first destination address corresponding to the MAC SDU $\#k_i'$; or if the $n^{th}$ second terminal device determines that the subheader corresponding to the MAC SDU $\#k_i'$ does not include the first source address and/or the first destination address corresponding to the MAC SDU $\#k_i'$, the $n^{th}$ second terminal device may determine that the first source address and/or the first destination address corresponding to the MAC SDU $\#k_i'$ are/is the same as a first source address and/or a first destination address corresponding to the $k_i^{th}$ MAC SDU, that is, the MAC SDU $\#k_i'$ belongs to the $k^{th}$ group of MAC SDUs.

A specific form of the second indication information is not limited in this embodiment of this application.

For example, the second indication information is a piece of 1-bit information. If a value of the second indication information is "0", the second indication information indicates that the subheader corresponding to the MAC SDU $\#k_i'$ includes the first source address and/or the first destination address corresponding to the MAC SDU $\#k_i'$; or if a value of the second indication information is "1", the second indication information indicates that the subheader corresponding to the MAC SDU $\#k_i'$ does not include the first source address and/or the first destination address corresponding to the MAC SDU $\#k_i'$. Alternatively, if a value of the second indication information is "1", the second indication information indicates that the subheader corresponding to the MAC SDU $\#k_i'$ includes the first source address and/or the first destination address corresponding to the MAC SDU $\#k_i'$; or if a value of the second indication information is "0", the second indication information indicates that the subheader corresponding to the MAC SDU $\#k_i'$ does not include the first source address and/or the first destination address corresponding to the MAC SDU $\#k_i'$.

For another example, the second indication information is a piece of 2-bit information. If a value of the second indication information is "00", the second indication information indicates that the subheader corresponding to the MAC SDU #$k_i$' does not include the first source address and/or the first destination address corresponding to the MAC SDU #$k_i$'; if a value of the second indication information is "01", the second indication information indicates that the subheader corresponding to the MAC SDU #$k_i$' includes the first source address corresponding to the MAC SDU #$k_i$'; if a value of the second indication information is "10", the second indication information indicates that the subheader corresponding to the MAC SDU #$k_i$' includes the first destination address corresponding to the MAC SDU #$k_i$'; or if a value of the second indication information is "11", the second indication information indicates that the subheader corresponding to the MAC SDU #$k_i$' includes the first source address and the first destination address corresponding to the MAC SDU #$k_i$'.

Optionally, a subheader corresponding to a $k_i$th MAC SDU in the $k$th group of MAC SDUs includes second indication information. The second indication information indicates that a subheader corresponding to a MAC SDU #$k_i$' includes a first source address and/or a first destination address corresponding to the MAC SDU #$k_i$', $k_i=l_k$, and $l_k$ represents a quantity of MAC SDUs included in the $k$th group of MAC SDUs. When $k_i=l_k$, it indicates that a subheader corresponding to a last MAC SDU in the $k$th group of MAC SDUs includes second indication information. Optionally, the second indication information is carried in a reserved bit of the subheader corresponding to the $k_i$th MAC SDU. It may be understood that if the $k$th group of MAC SDUs is a last group of MAC SDUs in the first TB, the subheader corresponding to the $k_i$th MAC SDU in the $k$th group of MAC SDUs does not include the second indication information.

Correspondingly, after the $n$th second terminal device receives the first TB, if the subheader corresponding to the $k_i$th MAC SDU in the $k$th group of MAC SDUs includes the second indication information, the $n$th second terminal device may determine that the subheader corresponding to the MAC SDU #$k_i$' includes the first source address and/or the first destination address corresponding to the MAC SDU #$k_i$'; or if the subheader corresponding to the $k_i$th MAC SDU in the $k$th group of MAC SDUs does not include the second indication information, the $n$th second terminal device may determine that the subheader corresponding to the MAC SDU #$k_i$' does not include the first source address and/or the first destination address corresponding to the MAC SDU #$k_i$'.

A specific form of the second indication information is not limited in this embodiment of this application.

For example, the second indication information is a piece of 1-bit information. If a value of the second indication information is "0", the second indication information indicates that the subheader corresponding to the MAC SDU #$k_i$' includes the first source address and/or the first destination address corresponding to the MAC

SDU #$k_i$'; or if a value of the second indication information is "1", the second indication information indicates that the subheader corresponding to the MAC SDU #$k_i$' includes the first source address and/or the first destination address corresponding to the MAC SDU #$k_i$'.

For another example, the second indication information is a piece of 2-bit information. If a value of the second indication information is "00", the second indication information indicates that the subheader corresponding to the MAC SDU #$k_i$' includes the first source address and the first destination address corresponding to the MAC SDU #$k_i$'; if a value of the second indication information is "01", the second indication information indicates that the subheader corresponding to the MAC SDU #$k_i$' includes the first source address corresponding to the MAC SDU #$k_i$'; or if a value of the second indication information is "10", the second indication information indicates that the subheader corresponding to the MAC SDU #$k_i$' includes the first destination address corresponding to the MAC SDU #$k_i$'.

In another possible implementation, the first TB includes K SL-SCH subheaders, and the K SL-SCH subheaders are in one-to-one correspondence with K groups of MAC SDUs. An SL-SCH subheader corresponding to a $k$th group of MAC SDUs in the K groups of MAC SDUs includes a first source address and/or a first destination address corresponding to the $k$th group of MAC SDUs.

Correspondingly, after receiving the first TB, an $n$th second terminal device in the N second terminal devices may parse the SL-SCH subheader corresponding to the $k$th group of MAC SDUs to obtain the first source address and/or the first destination address corresponding to the $k$th group of MAC SDUs, to determine, based on the first source address and/or the first destination address corresponding to the $k$th group of MAC SDUs, whether the $k$th group of MAC SDUs corresponds to the $n$th second terminal device.

For example, if the first source address corresponding to the $k$th group of MAC SDUs is the same as a first source address corresponding to a $(k-1)$th group of MAC SDUs, the SL-SCH subheader corresponding to the $k$th group of MAC SDUs may not include the first source address corresponding to the $k$th group of MAC SDUs.

Correspondingly, after the $n$th second terminal device receives the first TB, if the SL-SCH subheader corresponding to the $k$th group of MAC SDUs does not include the first source address corresponding to the $k$th group of MAC SDUs, the $n$th second terminal device may determine that the first source address corresponding to the $k$th group of MAC SDUs is the same as the first source address corresponding to the $(k-1)$th group of MAC SDUs.

For example, if the first destination address corresponding to the $k$th group of MAC SDUs is the same as a first destination address corresponding to a $(k-1)$th group of MAC SDUs, the SL-SCH subheader corresponding to the $k^{th}$ group of MAC SDUs may not include the first destination address corresponding to the $k^{th}$ group of MAC SDUs.

Correspondingly, after the $n^{th}$ second terminal device receives the first TB, if the SL-SCH subheader corresponding to the $k^{th}$ group of MAC SDUs does not include the first destination address corresponding to the $k^{th}$ group of MAC SDUs, the $n^{th}$ second terminal device may determine that the first destination address corresponding to the $k^{th}$ group of MAC SDUs is the same as the first destination address corresponding to the $(k-1)^{th}$ group of MAC SDUs.

Optionally, a subheader corresponding to a $k_i^{th}$ MAC SDU in the $k^{th}$ group of MAC SDUs includes third indication information. The third indication information indicates whether an SL-SCH subheader corresponding to a $(k+1)^{th}$ group of MAC SDUs is included after the $k_i^{th}$ MAC SDU, $k_i$=1, 2, ..., or $l_k$, and $l_k$ represents a quantity of MAC SDUs included in the $k^{th}$ group of MAC SDUs. When $k_i$=1, 2, ..., or $l_k$, it indicates that a subheader corresponding to each MAC SDU in the $k^{th}$ group of MAC SDUs includes third indication information. Optionally, the third indication information is carried in a reserved bit of the subheader corresponding to the $k_i^{th}$ MAC SDU.

Correspondingly, after receiving the first TB, the $n^{th}$ second terminal device may determine, based on the third indication information included in the subheader corresponding to the $k_i^{th}$ MAC SDU in the $k^{th}$ group of MAC SDUs, whether the SL-SCH subheader corresponding to the $(k+1)^{th}$ group of MAC SDUs is included after the $k_i^{th}$ MAC SDU. If the $n^{th}$ second terminal device determines that the SL-SCH subheader corresponding to the $(k+1)^{th}$ group of MAC SDUs is included after the $k_i^{th}$ MAC SDU, the $n^{th}$ second terminal device determines that the $k_i^{th}$ MAC SDU is a last MAC SDU in the $k^{th}$ group of MAC SDUs, and then the $n^{th}$ second terminal device may parse the SL-SCH subheader after the $k_i^{th}$ MAC SDU to obtain a first source address and/or a first destination address corresponding to the $(k+1)^{th}$ group MAC SDUs; or if the $n^{th}$ second terminal device determines that the SL-SCH subheader corresponding to the $(k+1)^{th}$ group of MAC SDUs is not included after the $k_i^{th}$ MAC SDU, the $n^{th}$ second terminal device may determine that a MAC SDU after the $k_i^{th}$ MAC SDU belongs to the $k^{th}$ group of MAC SDUs, that is, a first source address and/or a first destination address corresponding to the MAC SDU after the $k_i^{th}$ MAC SDU are/is the same as a first source address and/or a first destination address corresponding to the $k_i^{th}$ MAC SDU.

A specific form of the third indication information is not limited in this embodiment of this application.

For example, the third indication information is a piece of 1-bit information. If a value of the third indication information is "0", the third indication information indicates that the SL-SCH subheader corresponding to the $(k+1)^{th}$ group of MAC SDUs is included after the $k_i^{th}$ MAC SDU; or if a value of the third indication information is "1", the third indication information indicates that the SL-SCH subheader corresponding to the $(k+1)^{th}$ group of MAC SDUs is not included after the $k_i^{th}$ MAC SDU. Alternatively, if a value of the third indication information is "1", the third indication information indicates that the SL-SCH subheader corresponding to the $(k+1)^{th}$ group of MAC SDUs is included after the $k_i^{th}$ MAC SDU; or if a value of the third indication information is "0", the third indication information indicates that the SL-SCH subheader corresponding to the $(k+1)^{th}$ group of MAC SDUs is not included after the $k_i^{th}$ MAC SDU.

For another example, the third indication information is a piece of 2-bit information. If a value of the third indication information is "00", the third indication information indicates that the SL-SCH subheader corresponding to the $(k+1)^{th}$ group of MAC SDUs is not included after the $k_i^{th}$ MAC SDU; if a value of the third indication information is "01", the third indication information indicates that the SL-SCH subheader corresponding to the $(k+1)^{th}$ group of MAC SDUs is included after the $k_i^{th}$ MAC SDU, and the SL-SCH subheader corresponding to the $(k+1)^{th}$ group of MAC SDUs includes the first source address corresponding to the $(k+1)^{th}$ group of MAC SDUs; if a value of the third indication information is "10", the third indication information indicates that the SL-SCH subheader corresponding to the $(k+1)^{th}$ group of MAC SDUs is included after the $k_i^{th}$ MAC SDU, and the $(k+1)^{th}$ group of SL-SCH subheaders includes the first destination address corresponding to the $(k+1)^{th}$ group of MAC SDUs; or if a value of the third indication information is "11", the third indication information indicates that the SL-SCH subheader corresponding to the $(k+1)^{th}$ group of MAC SDUs is included after the $k_i^{th}$ MAC SDU, and the $(k+1)^{th}$ group of SL-SCH subheaders includes the first source address and the first destination address corresponding to the $(k+1)^{th}$ group of MAC SDUs.

Optionally, a subheader corresponding to a $k_i^{th}$ MAC SDU in the $k^{th}$ group of MAC SDUs includes third indication information. The third indication information indicates that an SL-SCH subheader corresponding to a $(k+1)^{th}$ group of MAC SDUs is included after the $k_i^{th}$ MAC SDU, $k_i$=$l_k$, and $l_k$ represents a quantity of MAC SDUs included in the $k^{th}$ group of MAC SDUs. When $k_i$=$l_k$, it indicates that a subheader corresponding to a last MAC SDU in the $k^{th}$ group of MAC SDUs includes third indication information. Optionally, the third indication information is carried in a reserved bit of the subheader corresponding to the $k_i^{th}$ MAC SDU. It may be understood that if the $k^{th}$ group of MAC SDUs is a last group of MAC SDUs in the first TB, the subheader corresponding to the $k_i^{th}$ MAC SDU in the $k^{th}$ group of MAC SDUs does not include the third indication information.

Correspondingly, after the $n^{th}$ second terminal device receives the first TB, if the subheader corresponding to the $k_i^{th}$ MAC SDU in the $k^{th}$ group of MAC SDUs includes the third indication information, the $n^{th}$ second terminal device may determine that the SL-SCH subheader corresponding to the $(k+1)^{th}$ group of MAC SDUs is included after the $k_i^{th}$ MAC SDU, and then the $n^{th}$ second terminal device may parse the SL-SCH subheader after the $k_i^{th}$ MAC SDU to obtain the first source address and/or the first destination address corresponding to the $(k+1)^{th}$ group of MAC SDUs; or if the subheader corresponding to the $k_i^{th}$ MAC SDU in the $k^{th}$ group of MAC SDUs does not include the third indication information, the $n^{th}$ second terminal device may determine that the SL-SCH subheader corresponding to the $(k+1)^{th}$ group of MAC SDUs is not included after the $k_i^{th}$ MAC SDU.

A specific form of the third indication information is not limited in this embodiment of this application.

For example, the third indication information is a piece of 1-bit information. If a value of the third indication information is "0", the third indication information indicates that the SL-SCH subheader corresponding to the $(k+1)^{th}$ group of MAC SDUs is included after the $k_i^{th}$ MAC SDU; or if a value of the third indication information is "1", the third indication information indicates that the SL-SCH subheader corresponding to the $(k+1)^{th}$ group of MAC SDUs is included after the $k_i^{th}$ MAC SDU.

For another example, the third indication information is a piece of 2-bit information. If a value of the third indication information is "00", the third indication information indicates that the SL-SCH subheader corresponding to the $(k+1)^{th}$ group of MAC SDUs is included after the $k_i^{th}$ MAC SDU, and the $(k+1)^{th}$ group of SL-SCH subheaders includes the first source address corresponding to the $(k+1)^{th}$ group of MAC SDUs; if a value of the third indication information is "01", the third indication information indicates that the SL-SCH subheader corresponding to the $(k+1)^{th}$ group of MAC SDUs is included after the $k_i^{th}$ MAC SDU, and the $(k+1)^{th}$ group of SL-SCH subheaders includes the first destination address corresponding to the $(k+1)^{th}$ group of MAC SDUs; or if a value of the third indication information is "10", the third indication information indicates that the SL-SCH subheader corresponding to the $(k+1)^{th}$ group of MAC SDUs is included after the $k_i^{th}$ MAC SDU, and the $(k+1)^{th}$ group of SL-SCH subheaders includes the first source address and the first destination address corresponding to the $(k+1)^{th}$ group of MAC SDUs.

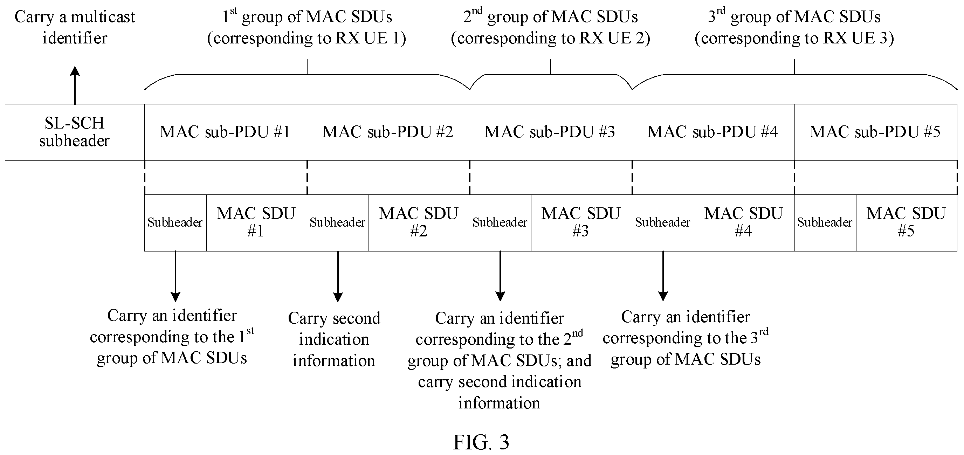

The following describes a structure of the first TB with reference to FIG. 3 to FIG. 5. The first TB shown in FIG. 3 to FIG. 5 includes three groups of MAC SDUs, and the three groups of MAC SDUs included in the first TB are in one-to-one correspondence with three second terminal devices (that is, an RX UE 1, an RX UE 2, and an RX UE 3 shown in FIG. 3 to FIG. 5).

As shown in FIG. 3, the first TB includes an SL-SCH subheader, and the SL-SCH subheader carries a multicast identifier. In other words, the SL-SCH subheader carries the second bit of the second source address and/or the second bit of the second destination address. The first TB further includes five MAC sub-PDUs (that is, a MAC sub-PDU #1 to a MAC sub-PDU #5), and each MAC sub-PDU includes one MAC SDU and a subheader corresponding to the MAC SDU. A subheader corresponding to a 1st MAC SDU (that is, a MAC SDU #1)

in a 1st group of MAC SDUs carries an identifier corresponding to the 1st group of MAC SDUs, that is, carries a first source address and/or a first destination address corresponding to the 1st group of MAC SDUs. The identifier corresponding to the 1st group of MAC SDUs corresponds to the RX UE 1. A subheader corresponding to a 2nd MAC SDU (that is, a MAC SDU #2) in the 1st group of MAC SDUs does not carry the identifier corresponding to the 1st group of MAC SDUs, but the subheader corresponding to the MAC SDU #2 carries second indication information indicating that a subheader corresponding to a MAC SDU #3 after the MAC SDU #2 includes an identifier corresponding to the MAC SDU #3. A 2nd group of MAC SDUs includes one MAC SDU (that is, the MAC SDU #3). The subheader corresponding to the MAC SDU #3 carries an identifier corresponding to the 2nd group of MAC SDUs, that is, carries a first source address and/or a first destination address corresponding to the 2nd group of MAC SDUs, and carries second indication information indicating that a subheader corresponding to a MAC SDU #4 after the MAC SDU #3 includes an identifier corresponding to the MAC SDU #4. The identifier corresponding to the 2nd group of MAC SDUs corresponds to the RX UE 2. A subheader corresponding to a 1st MAC SDU (that is, the MAC SDU #4) in a 3rd group of MAC SDUs carries an identifier corresponding to the 3rd group of MAC SDUs, that is, carries a first source address and/or a first destination address corresponding to the 3rd group of MAC SDUs. The identifier corresponding to the 3rd group of MAC SDUs corresponds to the RX UE 3. If a subheader corresponding to a 2nd MAC SDU (that is, a MAC SDU #5) in the 3rd group of MAC SDUs does not carry the identifier corresponding to the 3rd group of MAC SDUs, and there is no other MAC SDU after the MAC SDU #5, the subheader corresponding to the MAC SDU #5 does not carry second indication information.

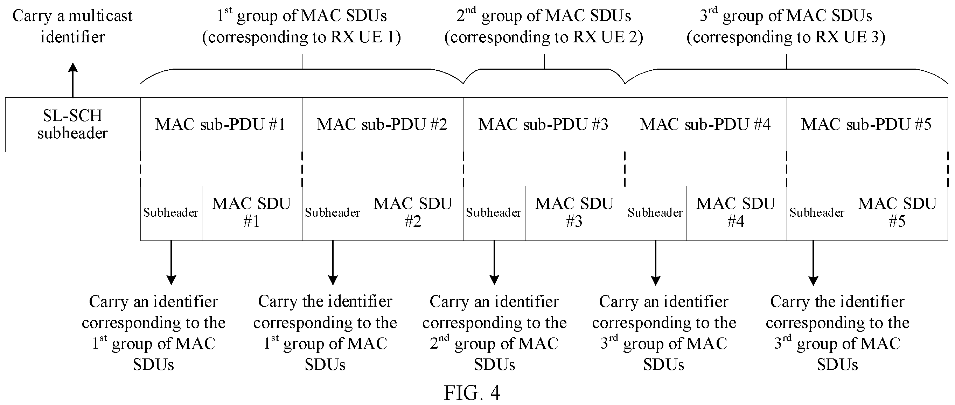

As shown in FIG. 4, the first TB includes an SL-SCH subheader, and the SL-SCH subheader carries a multicast identifier. In other words, the SL-SCH subheader carries the second bit of the second source address and/or the second bit of the second destination address. The first TB further includes five MAC sub-PDUs (that is, a MAC sub-PDU #1 to a MAC sub-PDU #5), and each MAC sub-PDU includes one MAC SDU and a subheader corresponding to the MAC SDU. A subheader corresponding to each MAC SDU (that is, a MAC SDU #1 and a MAC SDU #2) in a 1st group of MAC SDUs carries an identifier corresponding to the 1st group of MAC SDUs, that is, carries a first source address and/or a first destination address corresponding to the 1st group of MAC SDUs. The identifier corresponding to the 1st group of MAC SDUs corresponds to the RX UE 1. Each MAC SDU (that is, a MAC SDU #3) in a 2nd group of MAC SDUs carries an identifier corresponding to the 2nd group of MAC SDUs, that is, carries a first source address and/or a first destination address corresponding to the 2nd group of MAC SDUs. The identifier corresponding to the 2nd group of MAC SDUs corresponds to the RX UE 2. A subheader corresponding to each MAC SDU (that is, a MAC SDU #4 and a MAC SDU #5) in a 3rd group of MAC SDUs carries an identifier corresponding to the 3rd group of MAC SDUs, that is, carries a first source address and/or a first destination address corresponding to the 3rd group of MAC SDUs. The identifier corresponding to the 3rd group of MAC SDUs corresponds to the RX UE 3.

It should be noted that FIG. 3 and FIG. 4 show structures of the first TB by using an example in which a subheader corresponding to a MAC SDU is adjacent to the MAC SDU. In some possible implementations, subheaders corresponding to all MAC SDUs included in the first TB may be located before all the MAC SDUs, and an arrangement order of the subheaders corresponding to all the MAC SDUs is the same as an arrangement order of the MAC SDUs. For example, fields included in the first TB are sequentially the SL-SCH header, the subheader corresponding to the MAC SDU #1, the subheader corresponding to the MAC SDU #2, the subheader corresponding to the MAC SDU #3, the subheader corresponding to the MAC SDU #4, the subheader corresponding to the MAC SDU #5, the MAC SDU #1, the MAC SDU #2, the MAC SDU #3, the MAC SDU #4, and the MAC SDU #5 from front to back.

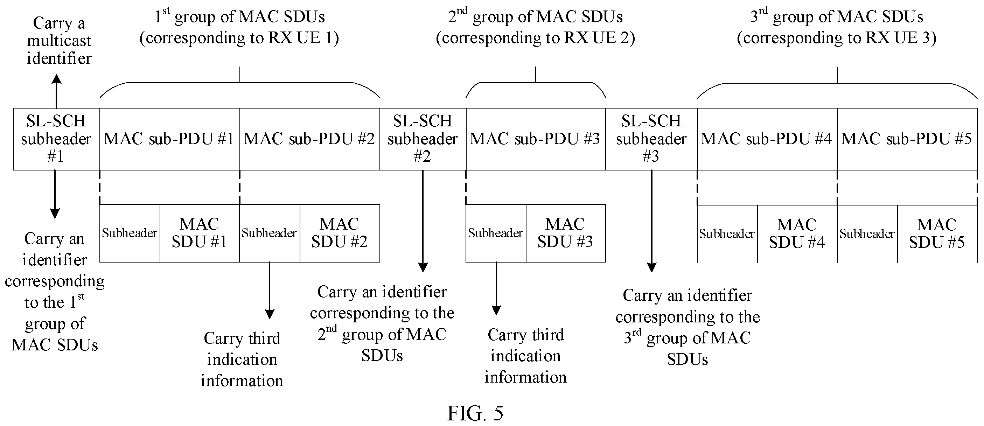

As shown in FIG. 5, the first TB includes three SL-SCH subheaders (that is, an SL-SCH subheader #1 to an SL-SCH subheader #3). The first TB further includes five MAC sub-PDUs (that is, a MAC sub-PDU #1 to a MAC sub-PDU #5), and each MAC sub-PDU includes one MAC SDU and a subheader corresponding to the MAC SDU. The SL-SCH subheader #1 carries a multicast identifier. In other words, the SL-SCH subheader #1 carries the second bit of the second source address and/or the second bit of the second destination address. The SL-SCH subheader #1 corresponds to a 1st group of MAC SDUs. The SL-SCH subheader #1 further carries an identifier corresponding to the 1st group of MAC SDUs, that is, carries a first source address and/or a first destination address corresponding to the 1st group of MAC SDUs. The identifier corresponding to the 1st group of MAC SDUs corresponds to the RX UE 1. A subheader corresponding to a 2nd MAC SDU (that is, a MAC SDU #2) in the 1st group of MAC SDUs carries third indication information indicating that an SL-SCH subheader (that is, an SL-SCH subheader #2) corresponding to a 2nd group of MAC SDUs is included after the MAC SDU #2. The SL-SCH subheader #2 carries an identifier corresponding to the 2nd group of MAC SDUs, that is, carries a first source address and/or a first destination address corresponding to the 2nd group of MAC SDUs. The identifier corresponding to the 2nd group of MAC SDUs corresponds to the RX UE 2. A MAC SDU #3 included in the 2nd group of MAC SDUs carries third indication information indicating that an SL-SCH subheader (that is, the SL-SCH subheader #3) corresponding to a 3rd group of MAC SDUs is included after the MAC SDU #3. The SL-SCH subheader #3 carries an identifier corresponding to the 3rd group of MAC SDUs, that is, carries a first source address and/or a first destination address corresponding to the 3rd group of MAC SDUs. The identifier corresponding to the 3rd group of MAC SDUs corresponds to the RX UE 3. If there is no SL-SCH subheader after a 2nd MAC SDU (that is, a MAC SDU #5) in the 3rd group of MAC SDUs, a subheader corresponding to the MAC SDU #5 does not carry third indication information.

S240: The first terminal device sends first indication information to the M second terminal devices.

Correspondingly, each of the M second terminal devices receives the first indication information from the first terminal device.

The first indication information indicates whether the first TB includes the MAC SDU corresponding to the mth second terminal device in the M second terminal devices, where m=1, 2, ..., or M.

For example, the first indication information includes the M bits in one-to-one correspondence with the M second terminal devices. The mth bit in the M bits indicates whether the first TB includes the MAC SDU corresponding to the mth second terminal device. For more descriptions of the correspondence between the M bits and the M second terminal devices, refer to the foregoing S210. For a manner in which the mth bit indicates whether the first TB includes the MAC SDU corresponding to the mth second terminal device, refer to the foregoing S210 in the method 200.

For example, the first indication information is carried in the SCI associated with the first TB.

If receiving the first indication information, the mth second terminal device in the M second terminal devices may determine, based on the first indication information, whether the first TB includes the MAC SDU corresponding to the mth second terminal device. Further, if the mth second terminal device determines that the first TB includes the MAC SDU corresponding to the mth second terminal device, the mth second terminal device receives the first TB on the resource used to transmit the first TB, and parses the first TB to obtain the MAC SDU corresponding to the mth second terminal device; or if the mth second terminal device determines that the first TB does not include the MAC SDU corresponding to the mth second terminal device, the mth second terminal device does not receive the first TB, or the mth second terminal device does not parse the first TB when receiving the first TB.

Optionally, the method 200 further includes S250.

S250: The N second terminal devices send feedback information to the first terminal device.

Correspondingly, the first terminal device receives the feedback information from the N second terminal devices.

Feedback information sent by the nth second terminal device in the N second terminal devices indicates a status of receiving the first TB by the nth second terminal device. For example, the nth second terminal device in the N second terminal devices sends a hybrid automatic repeat request (hybrid automatic repeat request, HARQ) feedback for the first TB to the first terminal device by using a physical sidelink feedback channel (physical sidelink feedback channel, PSFCH). For example, if the feedback information sent by the $n^{th}$ second terminal device is acknowledgment (acknowledgment, ACK) information, the feedback information sent by the $n^{th}$ second terminal device indicates that the $n^{th}$ second terminal device correctly receives the first TB; or if the feedback information sent by the $n^{th}$ second terminal device is negative acknowledgment (negative acknowledgment, NACK) information, the feedback information sent by the $n^{th}$ second terminal device indicates that the $n^{th}$ second terminal device does not correctly receive the first TB.

For example, the first terminal device receives the feedback information from the N second terminal devices on a first resource. For example, the first resource is a PSFCH resource associated with a PSSCH resource carrying the first TB. An index $H_n$ of a feedback resource unit corresponding to the $n^{th}$ second terminal device in the first resource satisfies $H_n=(T_{ID,n}+R_{ID,n})$ mod$(F)$. $T_{ID,n}$ represents all or a part of bits of a first source address corresponding to data sent by the first terminal device to the $n^{th}$ second terminal device. Alternatively, $T_{ID,n}$ is 0. $R_{ID,n}$ represents all or a part of bits of a first destination address corresponding to the data sent by the first terminal device to the $n^{th}$ second terminal device. Alternatively, $R_{ID,n}$ represents a number of the $n^{th}$ second terminal device in the M second terminal devices. F is a total quantity of indexes of feedback resource units included in the first resource. For example, an index of each feedback resource unit corresponds to one PRB and one pair of cyclic shifts of a Zadoff-Chu (ZC) sequence. One pair of cyclic shifts of the ZC sequence includes two different ZC sequence cyclic shifts respectively used to represent an ACK and a NACK. mod() indicates a modulo operation. When the first terminal device configures the correspondence between the M second terminal devices and the M bits for the M second terminal devices, the number of the $n^{th}$ second terminal device in the M second terminal devices may be a bit index or a location of a bit corresponding to the $n^{th}$ second terminal device in the M bits.

After determining the index $H_n$ of the corresponding feedback resource unit, the $n^{th}$ second terminal device may send, on a PRB associated with the index $H_n$ of the feedback resource unit, an ACK or a NACK by using a ZC sequence corresponding to a corresponding cyclic shift.

It should be noted that in S250, the first terminal device may receive feedback information from each of the N second terminal devices, or may receive feedback information from some of the N second terminal devices. For example, if channel quality between the first terminal device and a second terminal device in the N second terminal devices is poor, and the second terminal device does not detect the first TB, the second terminal device does not send feedback information to the first terminal device.

Optionally, if the first terminal device receives NACK information from at least one of the N second terminal devices, or the first terminal device does not receive ACK information from at least one of the N second terminal devices, the first terminal device may further perform retransmission based on the received feedback information, that is, the first terminal device may send a second TB. The second TB is the same as the first TB. Alternatively, the second TB has a different redundancy version (redundancy version, RV) number from the first TB. Alternatively, the second TB includes MAC SDUs corresponding to N' second terminal devices. The N' second terminal devices belong to the N second terminal devices. N' is a positive integer less than N.

For example, the first terminal device may determine a retransmission manner based on a proportion of received ACKs. For example, if the proportion of the ACKs received by the first terminal device is less than a first threshold, the second TB sent by the first terminal device is the same as the first TB, or the second TB has the different RV number from the first TB; or if the proportion of the ACKs received by the first terminal device is greater than or equal to a first threshold, the second TB sent by the first terminal device includes the MAC SDUs corresponding to the N' second terminal devices, and the feedback information received by the first terminal device does not include ACK information from the N' second terminal devices. The proportion of the ACKs is a ratio of a quantity of pieces of ACK information received by the first terminal device to N. Alternatively, the proportion of the ACKs is a ratio of a quantity of pieces of ACK information received by the first terminal device to a quantity of pieces of feedback information received by the first terminal device.

In this embodiment of this application, if the first terminal device establishes connections to the plurality of second terminal devices, when the first terminal device sends MAC SDUs to the plurality of second terminal devices, the first terminal device may multiplex the MAC SDUs sent to the plurality of second terminal devices into one first TB, and transmit the first TB on one PSSCH resource, so that resource utilization can be improved.

In addition, in the first TB sent by the first terminal device, a subheader corresponding to one MAC SDU in each group of MAC SDUs includes an identifier corresponding to the MAC SDU, or an SL-SCH subheader corresponding to each group of MAC SDUs includes identifiers corresponding to the MAC SDUs, so that the second terminal device may identify, based on the identifiers, a MAC SDU that is included in the first TB and that corresponds to the second terminal device.

In addition, when the first terminal device sends MAC SDUs to some of the plurality of second terminal devices, the first terminal device may send the first indication information to the plurality of second terminal devices, to indicate whether the first TB sent by the first terminal device includes a MAC SDU corresponding to each second terminal device, so that the plurality of second terminal devices may determine, based on the first indication information, whether to receive the first TB. Further, if the first indication information indicates that the first TB does not include a MAC SDU corresponding to a second terminal device, the second terminal device does not receive the first TB, so that power consumption of the second terminal device can be reduced.

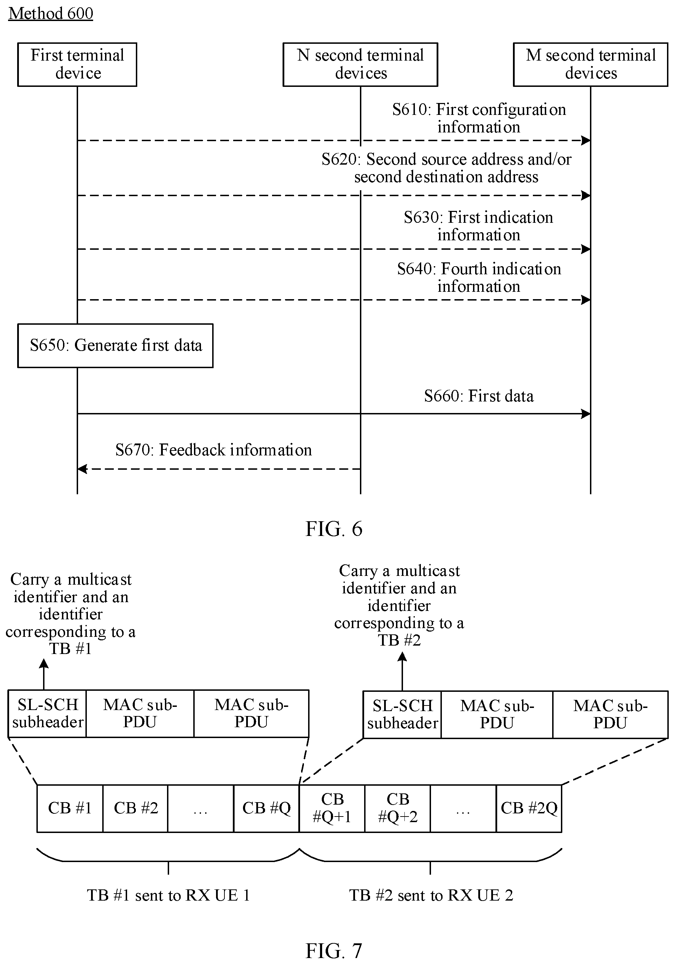

FIG. 6 is a schematic flowchart of a sidelink communication method 600 according to another embodiment of this application. As shown in FIG. 6, the method 600 may include the following steps.

S610: A first terminal device sends first configuration information to M second terminal devices.

Correspondingly, each of the M second terminal devices receives the first configuration information from the first terminal device. M is an integer greater than 1.

For more descriptions of S610, refer to S210 in the foregoing method 200.

S620: The first terminal device sends a second source address and/or a second destination address to the M second terminal devices.

Correspondingly, each of the M second terminal devices receives the second source address and/or the second destination address from the first terminal device.

For more descriptions of S620, refer to S220 in the foregoing method 200.

S630: The first terminal device sends first indication information to the M second terminal devices.

Correspondingly, each of the M second terminal devices receives the first indication information from the first terminal device.

The first indication information indicates whether first data includes a MAC SDU corresponding to an $m^{th}$ second terminal device in the M second terminal devices. Alternatively, the first indication information indicates whether a first data packet includes a TB corresponding to an $m^{th}$ second terminal device in the M second terminal devices. For more descriptions of the first data, refer to the following S650.

For example, the first indication information includes M bits in one-to-one correspondence with the M second terminal devices. An $m^{th}$ bit in the M bits indicates whether the first data includes the MAC SDU corresponding to the $m^{th}$ second terminal device. For more descriptions of the correspondence between the M bits and the M second terminal devices, refer to S210 in the foregoing method 200. For a manner in which the $m^{th}$ bit indicates whether the first data includes the MAC SDU corresponding to the $m^{th}$ second terminal device, refer to S210 in the foregoing method 200.

For example, the first indication information is carried in SCI associated with the first data.

If receiving the first indication information, the $m^{th}$ second terminal device in the M second terminal devices may determine, based on the first indication information, whether the first data includes the MAC SDU corresponding to the $m^{th}$ second terminal device. Further, if the $m^{th}$ second terminal device determines that the first data includes the MAC SDU corresponding to the $m^{th}$ second terminal device, the $m^{th}$ second terminal device receives the first data on a resource used to transmit the first data, and parses the first data to obtain the MAC SDU corresponding to the $m^{th}$ second terminal device; or if the $m^{th}$ second terminal device determines that the first data does not include the MAC SDU corresponding to the $m^{th}$ second terminal device, the $m^{th}$ second terminal device does not receive the first data, or the $m^{th}$ second terminal device does not parse the first data when receiving the first data.

S640: The first terminal device sends fourth indication information to the M second terminal devices.

Correspondingly, each of the M second terminal devices receives the fourth indication information from the first terminal device.

In some possible implementations, in S640, the first terminal device sends the fourth indication information to N second terminal devices in the M second terminal devices. N is a positive integer, and N≤M.

The fourth indication information indicates one or more of the following: a size of each of K TBs included in the first data, a quantity of resource units corresponding to each of the K TBs in the resource used to send the first data, time domain resource location information and/or frequency domain resource location information corresponding to each of the K TBs in the resource used to send the first data, or coding information and/or modulation information corresponding to each of the K TBs. K is a positive integer, and K≤N. For ease of description, the resource used to send the first data is denoted as a second resource below.

Optionally, the second resource is located on one subchannel or one frequency domain resource scheduling unit.

Time domain resource location information corresponding to a $k^{th}$ TB in the K TBs in the second resource includes one or more of the following: an index (index) of a slot (slot) occupied by the $k^{th}$ TB, an index of a start slot and a quantity of slots occupied by the $k^{th}$ TB, a quantity of symbols (symbols) occupied by the $k^{th}$ TB, or an index of a symbol occupied by the $k^{th}$ TB. Frequency domain resource location information corresponding to the $k^{th}$ TB in the second resource includes one or more of the following: an index of a PRB occupied by the $k^{th}$ TB, a quantity of PRBs occupied by the $k^{th}$ TB, and a frequency domain comb index or an interlace (interlace) index occupied by the $k^{th}$ TB. Herein, k=1, 2, ..., or K, where k=1, 2, ..., or K indicates that a value of k is each value in 1, 2, ..., and K, or in other words, the value of k traverses each integer value greater than or equal to 1 and less than or equal to K.

Coding information corresponding to the $k^{th}$ TB in the K TBs indicates a coding scheme used when the first terminal device performs channel coding on the $k^{th}$

TB. The coding scheme may be a value of a coding rate, and the value of the coding rate represents a relationship between a quantity of useful bits and a total quantity of bits. Alternatively, the coding information corresponding to the $k^{th}$ TB includes data indication information and RV information. The data indication information indicates whether the $k^{th}$ TB is a new TB. The RV information indicates an RV number corresponding to the $k^{th}$ TB. A coding rate of the $k^{th}$ TB may be indirectly determined by using the data indication information and the RV version number in the RV information. In other words, a ratio of a quantity of bits of a transport block indicated by the data indication information to a quantity of bits of the RV number is the coding rate of the $k^{th}$ TB.

Modulation information corresponding to the $k^{th}$ TB indicates a modulation scheme used when the first terminal device modulates the $k^{th}$ TB. For example, the modulation scheme for the $k^{th}$ TB is one of the following: quadrature phase shift keying (quadrature phase shift keying, QPSK), 16 quadrature amplitude modulation (quadrature amplitude modulation, QAM), or 64QAM.

It should be noted that if the size of each of the K TBs is predefined or preconfigured, or sizes of different TBs are equal, the fourth indication information may not indicate the size of each of the K TBs.

If the quantity of resource units corresponding to each of the K TBs in the second resource is predefined or preconfigured, or different TBs correspond to an equal quantity of resource units in the second resource, the fourth indication information may not indicate the quantity of resource units corresponding to each of the K TBs in the second resource.

If a time domain resource corresponding to each of the K TBs in the second resource is predefined or preconfigured, different TBs correspond to a same quantity of time domain resource units in the second resource, or different TBs correspond to a same time domain resource in the second resource, the fourth indication information may not indicate the time domain resource location information corresponding to each of the K TBs in the second resource.

If a frequency domain resource corresponding to each of the K TBs in the second resource is predefined or preconfigured, different TBs correspond to a same quantity of frequency domain resource units in the second resource, or different TBs correspond to a same frequency domain resource in the second resource, the fourth indication information may not indicate the frequency domain resource location information corresponding to each of the K TBs in the second resource.

If the coding information corresponding to each of the K TBs is predefined or preconfigured, the fourth indication information may not indicate the coding information corresponding to each TB. If the modulation information corresponding to each of the K TBs is predefined or preconfigured, the fourth indication information may not indicate the modulation information corresponding to each TB.

It should be further noted that if the foregoing plurality of items are predefined or preconfigured, S640 may not be performed in the method 600, that is, S640 is an optional step.

S650: The first terminal device generates the first data.

The first data includes the K TBs. The K TBs are in one-to-one correspondence with K first source addresses and/or K first destination addresses. In other words, the K TBs are in one-to-one correspondence with the K first source addresses. Alternatively, the K TBs are in one-to-one correspondence with the K first destination addresses. Alternatively, the K TBs are in one-to-one correspondence with K groups of addresses, and each of the K groups of addresses includes one first source address and one second source address. Different TBs in the K TBs correspond to different first source addresses and/or first destination addresses.

The K first source addresses correspond to the N second terminal devices in the M second terminal devices, or in other words, the K first source addresses correspond to connections (including one or more of a unicast connection, a multicast connection, and a broadcast connection) between the N second terminal devices and the first terminal device. The correspondence between the K first source addresses and the N second terminal devices may include a one-to-one relationship and/or a one-to-many relationship. For example, the K first source addresses are in one-to-one correspondence with the N second terminal devices. For another example, a first source address in the K first source addresses corresponds to two of the N second terminal devices.

The K first destination addresses correspond to the N second terminal devices in the M second terminal devices, or in other words, the K first destination addresses correspond to connections between the N second terminal devices and the first terminal device. The correspondence between the K second destination addresses and the N second terminal devices may include a one-to-one relationship and/or a one-to-many relationship. For example, the K first destination addresses are in one-to-one correspondence with the N second terminal devices. For another example, a first destination address in the K first destination addresses corresponds to two of the N second terminal devices.

The K TBs correspond to the N second terminal devices. For example, the K TBs are in one-to-one correspondence with the N second terminal devices. In this case, K=N. For another example, the K TBs include at least one group of TBs, and each TB in the at least one group of TBs corresponds to a plurality of second terminal devices. In this case, K<N.

For example, different TBs in the K TBs have a same size, or different TBs in the K TBs correspond to a same quantity of resource units in the second resource, for example, correspond to a same quantity of REs, a same quantity of PRBs, or a same quantity of symbols.

For example, locations of the K TBs in the first data are determined based on a number of each of the N second terminal devices in the M second terminal devices. If the first terminal device configures the correspondence between the M second terminal devices and the M bits for the M second terminal devices, the number of each of the N second terminal devices in the M second terminal devices may be a bit index of a bit corresponding to each second terminal device in the M bits. For example, the K TBs are sorted in the first data in descending order of numbers of second terminal devices corresponding to the TBs. To be specific, if a number of a second terminal device corresponding to the $k^{th}$ TB in the K TBs is larger, a location of the $k^{th}$ TB in the first data is closer to the front. For another example, the K TBs are sorted in the first data in ascending order of numbers of second terminal devices corresponding to the TBs. To be specific, if a number of a second terminal device corresponding to the $k^{th}$ TB in the K TBs is smaller, a location of the $k^{th}$ TB in the first data is closer to the front.

Optionally, if S620 is performed in the method 600, and the first terminal device sends a first bit of the second source address and/or a first bit of the second destination address to the M second terminal devices in S620, each of the K TBs includes a second bit of the second source address and/or a second bit of the second destination address. For descriptions of the second bit of the second source address, refer to S230 in the foregoing method 200. For descriptions of the second bit of the second destination address, refer to S230 in the foregoing method 200. The second bit of the second source address and/or the second bit of the second destination address that are/is included in each of the K TBs are/is carried in an SL-SCH subheader corresponding to the TB.

The following describes a structure of the first data with reference to FIG. 7. The first data shown in FIG. 7 includes two TBs (that is, a TB #1 and a TB #2), and the two TBs are in one-to-one correspondence with two second terminal devices (that is, an RX UE 1 and an RX UE 2). The TB #1 and the TB #2 have a same size. When the TB #1 and the TB #2 have the same size, a quantity of coding blocks (coding block, CB) obtained by the first terminal device by coding the TB #1 is equal to a quantity of CBs obtained by coding the TB #2, that is, both are Q, where Q is a positive integer. The TB #1 includes an SL-SCH subheader and two MAC sub-PDUs. The SL-SCH subheader of the TB #1 carries a multicast identifier, that is, carries a second bit of the second source address and/or a second bit of the second destination address. The SL-SCH subheader of the TB #1 further carries an identifier corresponding to the TB #1, that is, carries a first source address and/or a first destination address corresponding to the TB #1. The identifier corresponding to the TB #1 corresponds to the RX UE 1. The TB #2 includes an SL-SCH subheader and two MAC sub-PDUs. The SL-SCH subheader of the TB #2 carries a multicast identifier, that is, carries a second bit of the second source address and/or a second bit of the second destination address.

The SL-SCH subheader of the TB #2 further carries an identifier corresponding to the TB #2, that is, carries a first source address and/or a first destination address corresponding to the TB #2. The identifier corresponding to the TB #2 corresponds to the RX UE 2.

S660: The first terminal device sends the first data to the M second terminal devices.

Correspondingly, each of the M second terminal devices receives the first data from the first terminal device. Alternatively, each of the N second terminal devices receives the first data from the first terminal device.

For example, the first terminal device sends the first data to the M second terminal devices by using a first PSSCH.

As described above, the first terminal device may send the first indication information to the M second terminal devices. If receiving the first indication information, the $m^{th}$ second terminal device in the M second terminal devices may determine, based on the first indication information, whether the first data includes the MAC SDU or the TB corresponding to the $m^{th}$ second terminal device. A MAC SDU corresponding to a second terminal device may also be understood as a TB corresponding to the second terminal device. If the first indication information indicates that the first data does not include the MAC SDU corresponding to the $m^{th}$ second terminal device, the $m^{th}$ second terminal device does not receive the first data, or the $m^{th}$ second terminal device does not parse the first data. If the first indication information indicates that the first data includes the MAC SDU corresponding to the $m^{th}$ second terminal device, the $m^{th}$ second terminal device receives the first data, and parses the first data to obtain the MAC SDU corresponding to the $m^{th}$ second terminal device.

It should be understood that if the first data includes MAC SDUs corresponding to the N second terminal devices, an $n^{th}$ second terminal device in the N second terminal devices may receive the first data, and parse the first data to obtain a MAC SDU corresponding to the $n^{th}$ second terminal device. The following describes a manner in which the $n^{th}$ second terminal device parses the first data to obtain the MAC SDU corresponding to the $n^{th}$ second terminal device.

In a possible implementation, if the $n^{th}$ second terminal device receives the fourth indication information from the first terminal device, the $n^{th}$ second terminal device may parse the first data based on the fourth indication information, to obtain the MAC SDU corresponding to the $n^{th}$ second terminal device. For example, if the fourth indication information indicates the size of each of the K TBs, the $n^{th}$ second terminal device may determine, based on a size of the second resource and the size of each of the K TBs, a location of each of the K TBs in the first data, and then the $n^{th}$ second terminal device determines, based on an identifier carried in the $k^{th}$ TB (that is, a first source address and/or a first destination address corresponding to the $k^{th}$ TB) in the K TBs, whether the $k^{th}$ TB corresponds to the $n^{th}$ second terminal device. If the identifier carried in the $k^{th}$ TB corresponds to the $n^{th}$ second terminal device, the $n^{th}$ second terminal device determines that the $k^{th}$ TB corresponds to the $n^{th}$ second terminal device, and then the $n^{th}$ second terminal device may parse the $k^{th}$ TB to obtain the MAC SDU corresponding to the $n^{th}$ second terminal device.

In another possible implementation, if different TBs in the K TBs have the same size, or different TBs in the K TBs correspond to the same quantity of resource units in the second resource, the $n^{th}$ second terminal device may determine a location of each of the K TBs in the first data, and then the $n^{th}$ second terminal device determines, based on an identifier carried in the $k^{th}$ TB in the K TBs, whether the $k^{th}$ TB corresponds to the $n^{th}$ second terminal device. If the identifier carried in the $k^{th}$ TB corresponds to the $n^{th}$ second terminal device, the $n^{th}$ second terminal device determines that the $k^{th}$ TB corresponds to the $n^{th}$ second terminal device, and then the $n^{th}$ second terminal device may parse the $k^{th}$ TB to obtain the MAC SDU corresponding to the $n^{th}$ second terminal device.

In another possible implementation, if different TBs in the K TBs have the same size, or different TBs in the K TBs correspond to the same quantity of resource units in the second resource, the $n^{th}$ second terminal device may determine, based on an order of the K TBs in the first data, a location of a TB corresponding to the $n^{th}$ second terminal device in the first data, and then the $n^{th}$ second terminal device may parse the first data to obtain the TB corresponding to the $n^{th}$ second terminal device, and parse the TB corresponding to the $n^{th}$ second terminal device to obtain the MAC SDU corresponding to the $n^{th}$ second terminal device. The K TBs are sorted in the first data in descending order of the numbers of the second terminal devices corresponding to all the K TBs, or are sorted in the first data in ascending order of the numbers of the second terminal devices corresponding to all the K TBs. As shown in FIG. 7, if the K TBs are sorted in the first data in ascending order of the numbers of the second terminal devices corresponding to all the K TBs, after receiving the first data, the RX UE 1 determines, based on numbers of the RX UE 1 and the RX UE 2, that a $1^{st}$ TB (that is, the TB #1) included in the first data is the TB corresponding to the RX UE 1; and after receiving the first data, the RX UE 2 determines, based on the numbers of the RX UE 1 and the RX UE 2, that a $2^{nd}$ TB (that is, the TB #2) included in the first data is a TB corresponding to the RX UE 2.

Optionally, the method 600 further includes S670.

S670: The N second terminal devices send feedback information to the first terminal device.

Correspondingly, the first terminal device receives the feedback information from the N second terminal devices.

Feedback information sent by the $n^{th}$ second terminal device in the N second terminal devices indicates a status of receiving, by the $n^{th}$ second terminal device, a TB corresponding to the $n^{th}$ second terminal device. For example, the $n^{th}$ second terminal device in the N second terminal devices sends, to the first terminal device by using a PSFCH, a HARQ feedback corresponding to the first data or a HARQ feedback corresponding to the TB corresponding to the $n^{th}$ second terminal device in the first data. For example, if the feedback information sent by the $n^{th}$ second terminal device is ACK information, the feedback information sent by the $n^{th}$ second terminal device indicates that the $n^{th}$ second terminal device correctly receives the TB corresponding to the $n^{th}$ second terminal device; or if the feedback information sent by the $n^{th}$ second terminal device is NACK information, the feedback information sent by the $n^{th}$ second terminal device indicates that the $n^{th}$ second terminal device does not correctly receive the TB corresponding to the $n^{th}$ second terminal device.

For example, the first terminal device receives the feedback information from the N second terminal devices on a first resource. An index $H_n$ of a feedback resource unit corresponding to the $n^{th}$ second terminal device in the first resource satisfies $H_n=(T_{ID,n}+R_{ID,n})$ mod($F$). $T_{ID,n}$ represents all or a part of bits of a first source address corresponding to data sent by the first terminal device to the $n^{th}$ second terminal device. Alternatively, $T_{ID,n}$ is 0. $R_{ID,n}$ represents all or a part of bits of a first destination address corresponding to the data sent by the first terminal device to the $n^{th}$ second terminal device. Alternatively, $R_{ID,n}$ represents a number of the $n^{th}$ second terminal device in the M second terminal devices. $F$ is a total quantity of indexes of feedback resource units included in the first resource. mod() indicates a modulo operation. When the first terminal device configures the correspondence between the M second terminal devices and the M bits for the M second terminal devices, the number of the $n^{th}$ second terminal device in the M second terminal devices may be a bit index of a bit corresponding to the $n^{th}$ second terminal device in the M bits.

After determining the index $H_n$ of the corresponding feedback resource unit, the $n^{th}$ second terminal device may send, on a PRB associated with the index $H_n$ of the feedback resource unit, an ACK or a NACK by using a ZC sequence corresponding to a corresponding cyclic shift.

It should be noted that in S670, the first terminal device may receive feedback information from each of the N second terminal devices, or may receive feedback information from some of the N second terminal devices. For example, if channel quality between the first terminal device and a second terminal device in the N second terminal devices is poor, and the second terminal device does not detect the first data, the second terminal device does not send feedback information to the first terminal device.

Optionally, if the first terminal device receives NACK information from at least one of the N second terminal devices, or the first terminal device does not receive ACK information from at least one of the N second terminal devices, the first terminal device may further perform retransmission based on the received feedback information, that is, the first terminal device may send second data. The second data is the same as the first data. Alternatively, the second data includes TBs corresponding to N' second terminal devices. The N' second terminal devices belong to the N second terminal devices. N' is a positive integer less than N.

For example, the first terminal device may determine a retransmission manner based on a proportion of received ACKs. For example, if the proportion of the ACKs received by the first terminal device is less than a first threshold, the second data sent by the first terminal device is the same as the first data; or if the proportion of the ACKs received by the first terminal device is greater than or equal to a first threshold, the second data sent by the first terminal device includes MAC SDUs corresponding to the N' second terminal devices, and the feedback information received by the first terminal device does not include ACK information from the N' second terminal devices. For descriptions of the proportion of the ACKs, refer to S250 in the foregoing method 200.

Optionally, when N' is greater than 1, the first terminal device may further separately send, in a unicast manner, a TB corresponding to each second terminal device to the N' second terminal devices.

In this embodiment of this application, if the first terminal device establishes connections to the plurality of second terminal devices, when the first terminal device sends MAC SDUs to the plurality of second terminal devices, the first terminal device may multiplex the MAC SDUs sent to the plurality of second terminal devices into a plurality of TBs, concatenate the plurality of TBs into the first data, and then transmit the first data on one PSSCH resource, so that resource utilization can be improved.

In addition, when the first terminal device sends MAC SDUs to some of the plurality of second terminal devices, the first terminal device may send the first indication information to the plurality of second terminal devices, to indicate whether the first data sent by the first terminal device includes a MAC SDU corresponding to each second terminal device, so that the plurality of second terminal devices may determine, based on the first indication information, whether to receive the first data. Further, if the first indication information indicates that the first data does not include a MAC SDU corresponding to a second terminal device, the second terminal device does not receive the first data, so that power consumption of the second terminal device can be reduced.

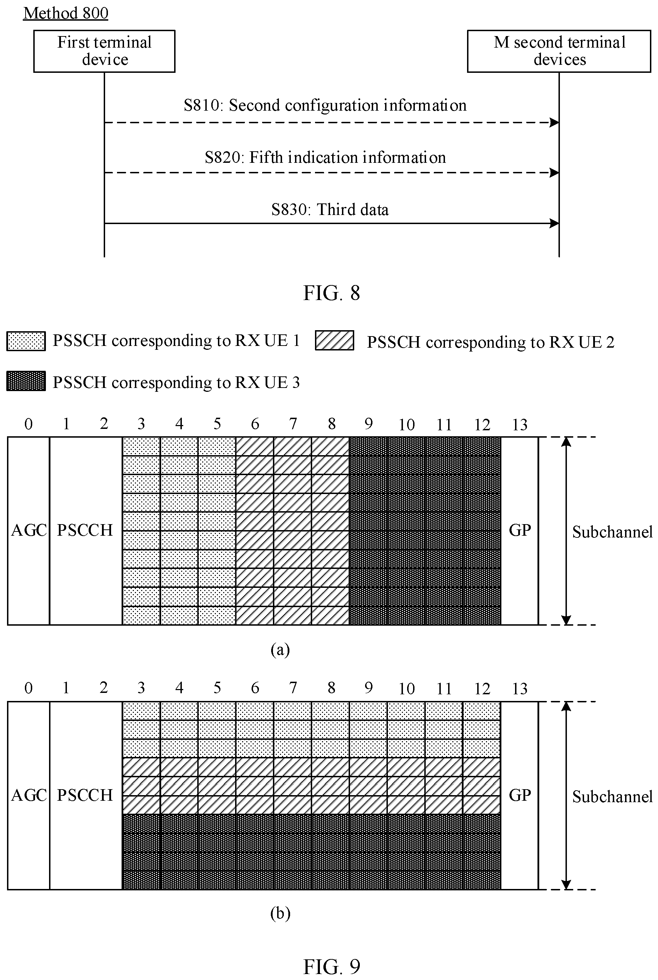

FIG. 8 is a schematic flowchart of a sidelink communication method 800 according to another embodiment of this application. As shown in FIG. 8, the method 800 includes the following steps.

S810: A first terminal device sends second configuration information to M second terminal devices.

Correspondingly, each of the M second terminal devices receives the second configuration information from the first terminal device. M is a positive integer. For more descriptions of the M second terminal devices, refer to S210 in the foregoing method 200.

The second configuration information is used to configure one or more of the following: HARQ process information, time domain resource location information and/or frequency domain resource location information of a periodic resource, or a location of a frequency domain unit and/or a location of a time domain unit corresponding to each of the M second terminal devices in a time-frequency resource in one cycle. The time domain unit may be a slot (slot), a mini-slot (mini-slot), a symbol (symbol), a frame (frame), or the like. The frequency domain unit may be a subchannel (subchannel), a subband (subband), a PRB, a resource element (resource element, RE), a subcarrier (subcarrier), or the like.

For example, the second configuration information may be referred to as semi-persistent scheduling (semi-persistent scheduling, SPS) resource configuration information.

The HARQ process information may include one or more of the following: information about a HARQ process number corresponding to a time-frequency resource in a 1st cycle of the periodic resource, information about a HARQ process number corresponding to a time-frequency resource in each cycle of the periodic resource, or a quantity of HARQ process numbers corresponding to the periodic resource. If the HARQ process information corresponding to the periodic resource is preconfigured or predefined, the HARQ process information may not be configured in the second configuration information.

The periodic resource may be a group of time-frequency resources, and the group of time-frequency resources are periodic in time domain. The time domain resource location information of the periodic resource includes one or more of the following: an index of a time domain unit included in the time-frequency resource in one cycle of the periodic resource, an index of a start time domain unit included in the time-frequency resource in one cycle of the periodic resource, or a quantity of time domain units included in the time-frequency resource in one cycle of the periodic resource. The frequency domain resource location information of the periodic resource includes one or more of the following: an index of a frequency domain unit included in the time-frequency resource in one cycle of the periodic resource, or a quantity of frequency domain units included in the time-frequency resource in one cycle of the periodic resource. For example, the time-frequency resource in one cycle of the periodic resource is located on one subchannel and one slot. If the time domain resource location information of the periodic resource is preconfigured or predefined, the time domain resource location information of the periodic resource may not be configured in the second configuration information. If the frequency domain resource location information of the periodic resource is preconfigured or predefined, the frequency domain resource location information of the periodic resource may not be configured in the second configuration information.

A frequency domain unit corresponding to an $m^{th}$ second terminal device in the M second terminal devices in the time-frequency resource in one cycle includes one frequency domain unit or a plurality of frequency domain units. When the frequency domain unit corresponding to the $m^{th}$ second terminal device in the time-frequency resource in one cycle includes a plurality of frequency domain units, the plurality of frequency domain units may be consecutive or non-consecutive. Herein, m=1, 2, ..., or M.

If the frequency domain unit is a PRB, a manner in which a PRB corresponding to the $m^{th}$ second terminal device in the time-frequency resource in one cycle is configured in the second configuration information includes the following several manners.

Manner 1: The second configuration information includes an $m^{th}$ first bitmap corresponding to the $m^{th}$ second terminal device, the $m^{th}$ first bitmap includes P bits, the P bits are in one-to-one correspondence with P PRBs included in the time-frequency resource in one cycle, and P is a positive integer. If a value of a bit #p in the P bits is a first value, the bit #p indicates that the PRB corresponding to the $m^{th}$ second terminal device in the time-frequency resource in one cycle includes a PRB corresponding to the bit #p; or if a value of a bit #p is a second value, the bit #p indicates that the PRB corresponding to the $m^{th}$ second terminal device in the time-frequency resource in one cycle does not include a PRB corresponding to the bit #p. Herein, p=1, 2, ..., or P. The first value is 1, and the second value is 0. Alternatively, the first value is 0, and the second value is 1.

Manner 2: The PRB corresponding to the $m^{th}$ second terminal device in the time-frequency resource in one cycle is indicated by using

$$\lceil \log_2(P*(P+1)/2) \rceil$$

bits. $\lceil \ \rceil$ indicates rounding up. For example, the time-frequency resource in one cycle includes P PRBs, and the $m^{th}$ second terminal device occupies consecutive PRBs. When an initial PRB occupied by the $m^{th}$ second terminal device is a $1^{st}$ PRB in the P PRBs, a quantity of the consecutive PRBs occupied by the $m^{th}$ second terminal device may be 1, 2, ..., or P. When an initial PRB occupied by the $m^{th}$ second terminal device is a $2^{nd}$ PRB in the P PRBs, a quantity of the consecutive PRBs occupied by the $m^{th}$ second terminal device may be 1, 2, ..., or P-1. By analogy, when an initial PRB occupied by the $m^{th}$ second terminal device is a $P^{th}$ PRB in the P PRBs, a quantity of the consecutive PRBs occupied by the $m^{th}$ second terminal device may be 1. Therefore, there are a total of P+(P-1)+(P-2)+...+1=P*(P+1)/2 possible combinations, and a specific corresponding combination may be indicated by using $\lceil \log_2(P*(P+1)/2) \rceil$ bits.

Manner 3: When the time-frequency resource in one cycle is divided into P' PRB sets, the second configuration information may include an $m^{th}$ second bitmap corresponding to the $m^{th}$ second terminal device, the $m^{th}$ second bitmap includes P' bits, the P' bits are in one-to-one correspondence with the P' PRB sets, and P' is a positive integer. If a value of a bit #p' in the P' bits is a first value, the bit #p' indicates that the PRB corresponding to the $m^{th}$ second terminal device in the time-frequency resource in one cycle includes a PRB set corresponding to the bit #p'; or if a value of a bit #p' is a second value, the bit #p' indicates that the PRB corresponding to the $m^{th}$ second terminal device in the time-frequency resource in one cycle does not include a PRB set corresponding to the bit #p'. Herein, p'=1, 2, ..., or P'. The first value is 1, and the second value is 0. Alternatively, the first value is 0, and the second value is 1. A value of P' may be preconfigured, or may be indicated by the first terminal device to the M second terminal devices.

Manner 4: When the time-frequency resource in one cycle is divided into P' PRB sets, the PRB corresponding to the $m^{th}$ second terminal device in the time-frequency resource in one cycle is indicated by using

$$\lceil \log_2(P'*(P'+1)/2) \rceil$$

bits. For more descriptions of Manner 4, refer to the foregoing descriptions of Manner 2.

Manner 5: When the time-frequency resource in one cycle includes P" combs (interlace), the second configuration information may indicate an index of a comb corresponding to the $m^{th}$ second terminal device in the time-frequency resource in one cycle.

A time domain unit corresponding to the $m^{th}$ second terminal device in the M second terminal devices in the time-frequency resource in one cycle includes one time domain unit or a plurality of time domain units. When the time domain unit corresponding to the $m^{th}$ second terminal device in the time-frequency resource in one cycle includes a plurality of time domain units, the plurality of time domain units may be consecutive or non-consecutive.

If the time domain unit is a symbol, a manner in which a symbol corresponding to the $m^{th}$ second terminal device in the time-frequency resource in one cycle is configured in the second configuration information includes the following several manners.

Manner a: The second configuration information includes an $m^{th}$ third bitmap corresponding to the $m^{th}$ second terminal device, the $m^{th}$ third bitmap includes X bits, the X bits are in one-to-one correspondence with X symbols for a PSSCH in the time-frequency resource in one cycle, or the X bits are in one-to-one correspondence with X symbols included in the time-frequency resource in one cycle, and X is a positive integer. If a value of a bit #x in the X bits is a first value, the bit #x indicates that the symbol corresponding to the $m^{th}$ second terminal device in the time-frequency resource in one cycle includes a symbol corresponding to the bit #x; or if a value of a bit #x is a second value, the bit #x indicates that the symbol corresponding to the $m^{th}$ second terminal device in the time-frequency resource in one cycle does not include a symbol corresponding to the bit #x. Herein, x=1, 2, ..., or X. The first value is 1, and the second value is 0. Alternatively, the first value is 0, and the second value is 1.

Manner b: The symbol corresponding to the $m^{th}$ second terminal device in the time-frequency resource in one cycle is indicated by using

$$\lceil \log_2(X*(X+1)/2) \rceil$$

bits. $\lceil \rceil$ indicates rounding up. For more descriptions of Manner b, refer to the foregoing descriptions of Manner 2.

Manner c: When X symbols for a PSSCH in the time-frequency resource in one cycle or X symbols included in the time-frequency resource in one cycle are divided into X' symbol sets, the second configuration information may include an $m^{th}$ fourth bitmap corresponding to the $m^{th}$ second terminal device, the $m^{th}$ fourth bitmap includes X' bits, the X' bits are in one-to-one correspondence with the X' symbol sets, and X' is a positive integer. If a value of a bit #x' in the X' bits is a first value, the bit #x' indicates that the symbol set corresponding to the $m^{th}$ second terminal device in the time-frequency resource in one cycle includes a symbol corresponding to the bit #x'; or if a value of a bit #x' is a second value, the bit #x' indicates that the symbol corresponding to the $m^{th}$ second terminal device in the time-frequency resource in one cycle does not include a symbol set corresponding to the bit #x'. Herein, x'=1, 2, ..., or X'. The first value is 1, and the second value is 0. Alternatively, the first value is 0, and the second value is 1. A value of X' may be preconfigured, or may be indicated by the first terminal device to the M second terminal devices.

Manner d: When X symbols for a PSSCH in the time-frequency resource in one cycle or X symbols included in the time-frequency resource in one cycle are divided into X' symbol sets, the symbol corresponding to the $m^{th}$ second terminal device in the time-frequency resource in one cycle is indicated by using

$$\lceil \log_2(X'*(X'+1)/2) \rceil$$

bits. For more descriptions of Manner d, refer to the foregoing descriptions of Manner 2.

It should be noted that if each of the M second terminal devices corresponds to a same frequency domain unit in the time-frequency resource in one cycle, that is, the M second terminal devices multiplex the time-frequency resource in one cycle in a time division multiplexing manner, a frequency domain unit corresponding to each of the M second terminal devices in the time-frequency resource in one cycle may not be configured in the second configuration information. As shown in (a) in FIG. 9, a PSSCH corresponding to each of three second terminal devices (that is, an RX UE 1 to an RX UE 3 shown in the figure) occupies an entire subchannel. In this case, a PRB corresponding to each of the M second terminal devices in the time-frequency resource in one cycle may not be configured in the second configuration information. Alternatively, if a PRB corresponding to each of the M second terminal devices in the time-frequency resource in one cycle is preconfigured or predefined, the PRB corresponding to each of the M second terminal devices in the time-frequency resource in one cycle may not be configured in the second configuration information. The time-frequency resource shown in (a) in FIG. 9 further includes an automatic gain control (automatic gain control, AGC) symbol and a guard period (guard period, GP) symbol.

It should be further noted that if each of the M second terminal devices corresponds to a same time domain unit in the time-frequency resource in one cycle, that is, the M second terminal devices multiplex the time-frequency resource in one cycle in a frequency division multiplexing manner, a time domain unit corresponding to each of the M second terminal devices in the time-frequency resource in one cycle may not be configured in the second configuration information. As shown in (b) in FIG. 9, a PSSCH corresponding to each of three second terminal devices (that is, an RX UE 1 to an RX UE 3 shown in the figure) occupies all symbols for the PSSCH in one slot. In this case, a symbol corresponding to each of the M second terminal devices in the time-frequency resource in one cycle may not be configured in the second configuration information. Alternatively, if a symbol corresponding to each of the M second terminal devices in the time-frequency resource in one cycle is preconfigured or predefined, the symbol corresponding to each of the M second terminal devices in the time-frequency resource in one cycle may not be configured in the second configuration information. The time-frequency resource shown in (b) in FIG. 9 further includes an AGC symbol and a GP symbol.

It should be further noted that S810 is an optional step. For example, if the first terminal device sends the second configuration information to the M second terminal devices before the method 800 is performed, S810 may not be performed in the method 800. Alternatively, if the foregoing plurality of items are preconfigured or predefined, S810 may not be performed in the method 800.

S820: The first terminal device sends fifth indication information to the M second terminal devices.

Correspondingly, each of the M second terminal devices receives the fifth indication information from the first terminal device.

The fifth indication information is carried in SCI associated with third data. The SCI associated with the third data may include first-order SCI and/or second-order SCI. The first-order SCI is SCI sent by the first terminal device to the M second terminal devices by using a PSCCH. The second-order SCI is SCI sent by the first terminal device to the M second terminal devices by using the PSSCH. Optionally, the SCI managed by the third data may include SCI newly defined in a future protocol or standard. The third data includes a TB corresponding to each of N second terminal devices. The N second terminal devices belong to the M second terminal devices. N is a positive integer, and $N \leq M$.

In a possible implementation, in S820, the first terminal device sends the fifth indication information to the N second terminal devices.

The fifth indication information indicates one or more of the following: modulation and coding schemes (modulation and coding scheme, MCS) respectively corresponding to the N second terminal devices, highest service priorities corresponding to the N second terminal devices, resource reservation information, and demodulation reference signal (demodulation reference signal, DMRS) information.

An MCS corresponding to an $n^{th}$ second terminal device in the N second terminal devices is used by the $n^{th}$ second terminal device to parse a TB corresponding to the $n^{th}$ second terminal device in the third data, where n=1, 2, ..., or N.

The resource reservation information indicates a resource occupied (or reserved) by the first terminal device.

The DMRS information is used by the $n^{th}$ second terminal device to demodulate the TB corresponding to the $n^{th}$ second terminal device in the third data.

It should be noted that S820 is an optional step. For example, in a first transmission process of periodic transmission, if the first terminal device sends the fifth indication information to the M second terminal devices, and current transmission is not first transmission of periodic transmission, S820 may not be performed in the method 800.

S830: The first terminal device sends the third data to the M second terminal devices.

Correspondingly, the N second terminal devices in the M second terminal devices receive the third data from the first terminal device.

The third data includes the TB corresponding to each of the N second terminal devices, or in other words, N TBs sent by the first terminal device to the N second terminal devices may be referred to as the third data. The third data is carried on one PSSCH for sending. Alternatively, the N TBs included in the third data are carried on a plurality of PSSCHs for sending, and each of the plurality of PSSCHs carries a different TB. That the first terminal device sends the third data to the M second terminal devices includes: The first terminal device sends, on a time-frequency resource corresponding to each of the N second terminal devices, the TB corresponding to each second terminal device. The time-frequency resource corresponding to each of the N second terminal devices is preconfigured, predefined, or configured by the first terminal device.

As shown in (a) in FIG. 9, the N second terminal devices include the RX UE 1 to the RX UE 3, and a PSSCH corresponding to the RX UE 1 occupies a symbol 3 to a symbol 5 of one subchannel. The first terminal device sends, on the symbol 3 to the symbol 5 of one subchannel, a TB 1 corresponding to the RX UE 1. Correspondingly, the RX UE 1 receives the TB 1 from the first terminal device on the symbol 3 to the symbol 5 of one subchannel. A PSSCH corresponding to an RX UE 2 occupies a symbol 6 to a symbol 8 of one subchannel. The first terminal device sends, on the symbol 6 to the symbol 8 of one subchannel, a TB 2 corresponding to the RX UE 2. Correspondingly, the RX UE 2 receives the TB 2 from the first terminal device on the symbol 6 to the symbol 8 of one subchannel. A PSSCH corresponding to the RX UE 3 occupies a symbol 9 to a symbol 12 of one subchannel. The first terminal device sends, on the symbol 9 to the symbol 12 of one subchannel, a TB 3 corresponding to the RX UE 3. Correspondingly, the RX UE 3 receives the TB 3 from the first terminal device on the symbol 9 to the symbol 12 of one subchannel.

In this embodiment of this application, the first terminal device may multiplex an orthogonal time-frequency resource in a resource of one subchannel to send TBs to a plurality of second terminal devices, so that resource utilization can be improved.

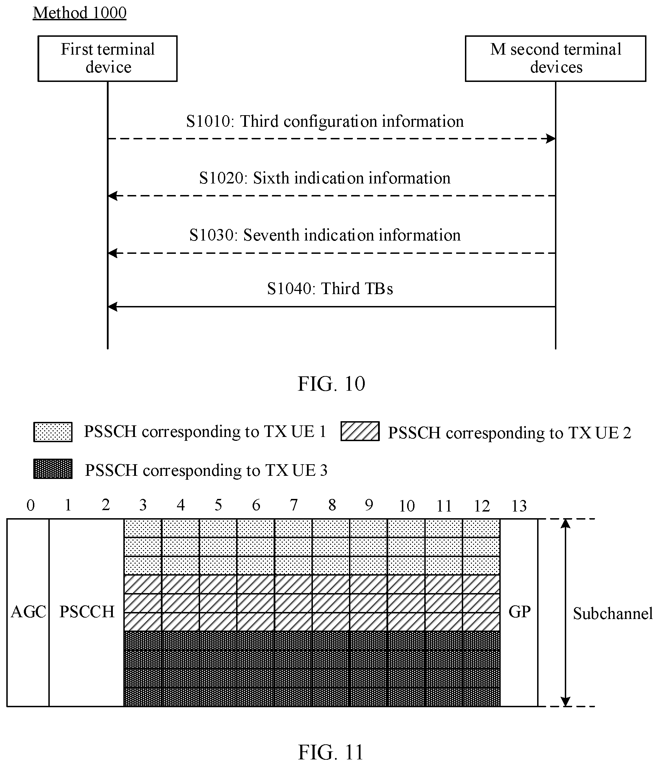

FIG. 10 is a schematic flowchart of a sidelink communication method 1000 according to another embodiment of this application. As shown in FIG. 10, the method 1000 includes the following steps.

S1010: A first terminal device sends third configuration information to M second terminal devices.

Correspondingly, each of the M second terminal devices receives the third configuration information from the first terminal device. M is a positive integer.

The third configuration information is used to configure one or more of the following: HARQ process information, time domain resource location information and/or frequency domain resource location information of a periodic resource, or a location of a frequency domain unit corresponding to each of the M second terminal devices in a time-frequency resource in one cycle. The frequency domain unit may be a subchannel, a subband, a PRB, an RE, a subcarrier, or the like.

The third configuration information may be referred to as configured grant (configured grant, CG) resource configuration information.

For more descriptions of the third configuration information, refer to the descriptions of the second configuration information in S810.

S1020: The M second terminal devices send sixth indication information to the first terminal device.

Correspondingly, the first terminal device receives sixth indication information from each of the M second terminal devices.

Sixth indication information sent by an $m^{th}$ second terminal device in the M second terminal devices to the first terminal device is carried in SCI associated with a third TB sent by the $m^{th}$ second terminal device to the first terminal device. The SCI associated with the third TB may include first-order SCI and/or second-order SCI. The first-order SCI is SCI sent by the second terminal device to the first terminal device by using a PSCCH. The second-order SCI is SCI sent by the second terminal device to the first terminal device by using a PSSCH. Optionally, the SCI associated with the third TB may include SCI newly defined in a future protocol or standard, where m=1, 2, ..., or M.

The sixth indication information sent by the $m^{th}$ second terminal device to the first terminal device indicates one or more of the following: an MCS corresponding to the third TB sent by the $m^{th}$ second terminal device to the first terminal device, resource reservation information, and DMRS information corresponding to the third TB sent by the $m^{th}$ second terminal device to the first terminal device.

Optionally, resource reservation information indicated by sixth indication information sent by different second terminal devices in the M second terminal devices to the first terminal device may be the same. In this case, the sixth indication information is carried in the first-order SCI associated with the third TB sent by the $m^{th}$ second terminal device to the first terminal device.

In a possible implementation, in S1020, N second terminal devices in the M second terminal devices send sixth indication information to the first terminal device.

It should be noted that S1020 is an optional step. For example, in a first transmission process of periodic transmission, if the M second terminal devices send the sixth indication information to the first terminal device, and current transmission is not first transmission of periodic transmission, S1020 may not be performed in the method 1000.

Optionally, if the sixth indication information indicates only the resource reservation information, the method 1000 further includes S1030.

S1030: The M second terminal devices send seventh indication information to the first terminal device.

Correspondingly, the first terminal device receives seventh indication information from each of the M second terminal devices.

Seventh indication information sent by the $m^{th}$ second terminal device in the M second terminal devices to the first terminal device is carried in the second-order SCI associated with the third TB sent by the $m^{th}$ second terminal device to the first terminal device.

The seventh indication information sent by the $m^{th}$ second terminal device to the first terminal device indicates one or more of the following: the MCS corresponding to the third TB sent by the $m^{th}$ second terminal device to the first terminal device, and the DMRS information corresponding to the third TB sent by the $m^{th}$ second terminal device to the first terminal device.

In a possible implementation, in S1030, the N second terminal devices in the M second terminal devices send seventh indication information to the first terminal device.

S1040: The M second terminal devices send third TBs to the first terminal device.

Correspondingly, the first terminal device receives a third TB from each of the M second terminal devices.

Each of the M second terminal devices sends the third TB to the first terminal device on a corresponding time-frequency resource. The time-frequency resource corresponding to each of the M second terminal devices is preconfigured, predefined, or configured by the first terminal device. It should be noted that different second terminal devices in the M second terminal devices send different third TBs to the first terminal device.

As shown in FIG. 11, the N second terminal devices include a TX UE 1 to a TX UE 3, and a PSSCH corresponding to the TX UE 1 occupies first three PRBs of one subchannel. The TX UE 1 sends a third TB to the first terminal device on the first three PRBs of one subchannel. Correspondingly, the first terminal device receives the third TB from the TX UE 1 on the first three PRBs of one subchannel. A PSSCH corresponding to a TX UE 2 occupies a fourth PRB to a sixth PRB of one subchannel. The TX UE2 sends a third TB to the first terminal device on the fourth PRB to the fifth PRB of one subchannel. Correspondingly, the first terminal device receives the third TB from the TX UE 2 on the fourth PRB to the sixth PRB of one subchannel. A PSSCH corresponding to the TX UE 3 occupies a seventh PRB to a tenth PRB of one subchannel. The TX UE 3 sends a third TB to the first terminal device on the seventh PRB to the tenth PRB of one subchannel. Correspondingly, the first terminal device receives the third TB from the TX UE 3 on the seventh PRB to the tenth PRB of one subchannel.

In a possible implementation, in S1040, the N second terminal devices in the M second terminal devices send third TBs to the first terminal device. It should be noted that different second terminal devices in the N second terminal devices send different third TBs to the first terminal device.

In this embodiment of this application, a plurality of second terminal devices may multiplex an orthogonal time-frequency resource in a resource of one subchannel to send TBs to the first terminal device, so that resource utilization can be improved.

It may be understood that some optional features in embodiments of this application may be independent of other features in some scenarios, or may be combined with other features in some scenarios. This is not limited.

It may be further understood that in some of the foregoing embodiments, sending information is mentioned for a plurality of times. For example, A sends information to B. That A sends information to B may include that A directly sends the information to B, or may include that A sends the information to B via another device or network element. This is not limited.

It may be further understood that the solutions in embodiments of this application may be appropriately combined for use, and explanations or descriptions of terms in embodiments may be mutually referenced or explained in embodiments. This is not limited.

It may be further understood that in the foregoing method embodiments, methods and operations implemented by a network element may alternatively be implemented by a component (for example, a chip or a circuit) of the network element.

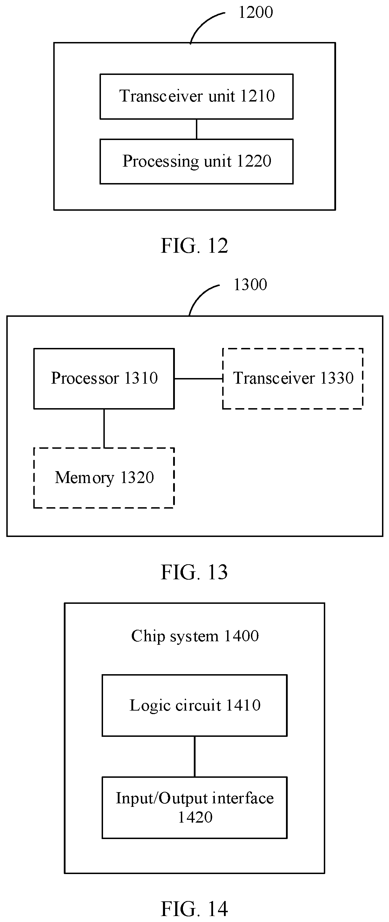

The methods according to embodiments of this application are described above in detail with reference to FIG. 2 to FIG. 11. An apparatus provided in embodiments of this application is described in detail below with reference to FIG. 12 to FIG. 14. It should be understood that descriptions of apparatus embodiments correspond to the descriptions of the method embodiments. Therefore, for content that is not described in detail, refer to the foregoing method embodiments. For brevity, details are not described herein again.

FIG. 12 is a diagram of a communication apparatus 1200 according to an embodiment of this application. The apparatus 1200 includes a transceiver unit 1210 and a processing unit 1220. The transceiver unit 1210 may be configured to implement a corresponding communication function. The transceiver unit 1210 may also be referred to as a communication interface or a communication unit. The processing unit 1220 may be configured to perform processing. Optionally, the transceiver unit 1210 may include a receiving unit and a sending unit. The receiving unit is configured to implement a receiving function. The sending unit is configured to implement a sending function.

Optionally, the apparatus 1200 may further include a storage unit. The storage unit may be configured to store instructions and/or data. The processing unit 1220 may read the instructions and/or the data in the storage unit, so that the apparatus implements the foregoing method embodiments.

In a design, the apparatus 1200 is configured to perform the steps or procedures performed by the device in the foregoing method embodiments. The transceiver unit 1210 is configured to perform receiving/sending-related operations on a device side in the foregoing method embodiments. The processing unit 1220 is configured to perform processing-related operations on the device side in the foregoing method embodiments.

In a possible implementation, the apparatus 1200 is configured to perform the steps or procedures performed by the first terminal device in the embodiment shown in FIG. 2. Optionally, the transceiver unit 1210 is configured to send a first TB to M second terminal devices. The first TB corresponds to at least two first source addresses and/or at least two first destination addresses. The at least two first source addresses correspond to at least two of the M second terminal devices. The at least two first destination addresses correspond to at least two of the M second terminal devices. M is a positive integer greater than 1. The transceiver unit 1210 is further configured to send first indication information to the M second terminal devices. The first indication information indicates whether the first TB includes a MAC SDU corresponding to an $m^{th}$ second terminal device in the M second terminal devices, and m=1, 2, ..., or M.

In another possible implementation, the apparatus 1200 is configured to perform the steps or procedures performed by the second terminal device in the embodiment shown in FIG. 2. Optionally, the transceiver unit 1210 is configured to receive first indication information from a first terminal device. The first indication information indicates whether a first TB includes a MAC SDU corresponding to an $m^{th}$ second terminal device in M second terminal devices. The first TB corresponds to at least two first source addresses and/or at least two first destination addresses. The at least two first source addresses correspond to at least two of the M second terminal devices. The at least two first destination addresses correspond to at least two of the M second terminal devices. M is a positive integer, and m=1, 2, ..., or M. The transceiver unit 1210 is further configured to receive the first TB from the first terminal device based on the first indication information.

In another possible implementation, the apparatus 1200 is configured to perform the steps or procedures performed by the first terminal device in the embodiment shown in FIG. 6. Optionally, the processing unit 1220 is configured to generate first data. The first data includes K TBs. The K TBs correspond to K first source addresses and/or K first destination addresses. The K first destination addresses correspond to N second terminal devices in M second terminal devices. The K first source addresses correspond to the N second terminal devices. M, N, and K are all integers greater than 1, and $1<K \leq N \leq M$. The transceiver unit 1210 is configured to send the first data to the M second terminal devices by using a first PSSCH.

In another possible implementation, the apparatus 1200 is configured to perform the steps or procedures performed by the second terminal device in the embodiment shown in FIG. 6. Optionally, the transceiver unit 1210 is configured to receive first data from a first terminal device by using a first PSSCH. The first data includes K TBs. The K TBs correspond to K first source addresses and/or K first destination addresses. The K first source addresses correspond to N second terminal devices. The K first destination addresses correspond to the N second terminal devices. Both N and K are integers greater than 1, and $K \leq N$. The processing unit 1220 is configured to determine, based on a first source address and/or a first destination address corresponding to a $k^{th}$ TB in the K TBs, whether the $k^{th}$ TB corresponds to an $n^{th}$ second terminal device in the N second terminal devices, where n=1, 2, ..., or N, and k=1, 2, ..., or K.

It should be understood that a specific process in which the units perform the foregoing corresponding steps is described in detail in the foregoing method embodiments, and for brevity, details are not described herein.

It should be understood that the apparatus 1200 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 1200 may be specifically the device (for example, the first terminal device or the second terminal device) in the foregoing embodiments, and may be configured to perform procedures and/or steps corresponding to the device in the foregoing method embodiments. To avoid repetition, details are not described herein again.

The apparatus 1200 in the foregoing solutions has a function of implementing corresponding steps performed by the device (for example, the first terminal device or the second terminal device) in the foregoing methods. The function may be implemented by hardware, or may be implemented by hardware executing corresponding software. The hardware or the software includes one or more modules corresponding to the foregoing functions. For example, the transceiver unit may be replaced by a transceiver (for example, a sending unit in the transceiver unit may alternatively be a transmitter, and a receiving unit in the transceiver unit may alternatively be a receiver), and another unit, for example, the processing unit, may alternatively be a processor, to separately perform receiving-sending operations and a related processing operation in the method embodiments.

In addition, the transceiver unit 1210 may alternatively be a transceiver circuit (for example, the transceiver circuit may include a receiver circuit and a transmitter circuit), and the processing unit 1220 may be a processing circuit.

It should be noted that the apparatus in FIG. 12 may be the device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

FIG. 13 is a diagram of another communication apparatus 1300 according to an embodiment of this application. The apparatus 1300 includes a processor 1310. The processor 1310 is coupled to a memory 1320. The memory 1320 is configured to store a computer program or instructions and/or data. The processor 1310 is configured to execute the computer program or the instructions stored in the memory 1320, or read the data stored in the memory 1320, to perform the methods in the foregoing method embodiments.

Optionally, there are one or more processors 1310.

Optionally, there are one or more memories 1320.

Optionally, the memory 1320 and the processor 1310 are integrated together, or are disposed separately.

Optionally, as shown in FIG. 13, the apparatus 1300 further includes a transceiver 1330. The transceiver 1330 is configured to receive and/or send a signal. For example, the processor 1310 is configured to control the transceiver 1330 to receive and/or send the signal. Optionally, the transceiver 1330 may include a receiver and a transmitter. The receiver is configured to receive a signal. The transmitter is configured to send a signal.

For example, the processor 1310 may have a function of the processing unit 1220 shown in FIG. 12, the memory 1320 may have a function of the storage unit, and the transceiver 1330 may have a function of the transceiver unit 1210 shown in FIG. 12.

In a solution, the apparatus 1300 is configured to implement operations performed by a device (for example, the first terminal device or the second terminal device) in the foregoing method embodiments.

For example, the processor 1310 is configured to execute the computer program or the instructions stored in the memory 1320, to implement the related operations of the device (for example, the first terminal device or the second terminal device) in the foregoing method embodiments.

It should be understood that the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor. Alternatively, the processor may be any conventional processor or the like.

It should be further understood that the memory mentioned in embodiments of this application may be a volatile memory and/or a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, but not limitation, the RAM includes a plurality of forms below: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (storage module) may be integrated into the processor.

The apparatus in FIG. 13 may be the device in the foregoing embodiments, or may be a chip or a chip system, for example, a system on chip (system on chip, SoC). The transceiver may be an input/output circuit or a communication interface. The processor is a processor, a microprocessor, or an integrated circuit integrated on the chip. This is not limited herein.

It should further be noted that the memory described in this specification is intended to include but is not limited to these memories and a memory of any other appropriate type.

FIG. 14 is a diagram of a chip system 1400 according to an embodiment of this application. The chip system 1400 (or referred to as a processing system) includes a logic circuit 1410 and an input/output interface (input/output interface) 1420.

The logic circuit 1410 may be a processing circuit in the chip system 1400. The logic circuit 1410 may be coupled to a storage unit, and invokes instructions in the storage unit, so that the chip system 1400 can implement the methods and functions in embodiments of this application. The input/output interface 1420 may be an input/output circuit in the chip system 1400, and outputs information processed by the chip system 1400, or inputs to-be-processed data or signaling information to the chip system 1400 for processing.

Specifically, for example, if the chip system 1400 is installed on a terminal device, the logic circuit 1410 is coupled to the input/output interface 1420, and the input/output interface 1420 may input a TB (for example, a first TB) to the logic circuit 1410 for processing, for example, decoding of the TB.

In a solution, the chip system 1400 is configured to implement operations performed by a device (for example, the first terminal device or the second terminal device) in the foregoing method embodiments.

For example, the logic circuit 1410 is configured to implement processing-related operations performed by the device (for example, the first terminal device or the second terminal device) in the foregoing method embodiments, and the input/output interface 1420 is configured to implement sending- and/or receiving-related operations performed by the device (for example, the first terminal device or the second terminal device) in the foregoing method embodiments.

An embodiment of this application further provides a computer-readable storage medium. The computer-readable storage medium stores computer instructions for implementing the methods performed by a device (for example, the first terminal device or the second terminal device) in the foregoing method embodiments.

For example, when a computer program is executed by a computer, the computer is enabled to implement the method performed by the device (for example, the first terminal device or the second terminal device) in the foregoing method embodiments.

An embodiment of this application further provides a computer program product, including instructions. When the instructions are executed by a computer, the methods performed by a device (for example, the first terminal device or the second terminal device) in the foregoing method embodiments are implemented.

An embodiment of this application further provides a communication system. The communication system includes the first terminal device and the second terminal device in the foregoing embodiments. For example, the communication system includes the first terminal device and the second terminal device in the embodiment shown in FIG. 2, FIG. 6, FIG. 8, or FIG. 10.

For explanations and beneficial effects of related content in any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by using software, hardware, firmware, or any combination thereof. When software is used to implement the foregoing embodiments, all or a part of the foregoing embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. For example, the computer may be a personal computer, a server, a network device, or the like. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible to a computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid state disk (solid state disk, SSD)), or the like. For example, the usable medium may include but is not limited to any medium that can store program code, for example, a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A sidelink communication method, comprising:

   sending, by a first terminal device, a first transport block TB to M second terminal devices, wherein the first TB corresponds to at least two first source addresses and/or at least two first destination addresses, the at least two first source addresses correspond to at least two of the M second terminal devices, the at least two first destination addresses correspond to at least two of the M second terminal devices, and M is a positive integer greater than 1; and
   sending, by the first terminal device, first indication information to the M second terminal devices, wherein the first indication information indicates whether the first TB comprises a media access control MAC service data unit SDU corresponding to an $m^{th}$ second terminal device in the M second terminal devices, and m=1, 2, ..., or M.

2. The method according to claim 1, wherein the first indication information comprises M bits in one-to-one correspondence with the M second terminal devices, an $m^{th}$ bit in the M bits indicates whether the first TB comprises the MAC SDU corresponding to the $m^{th}$ second terminal device, and the $m^{th}$ bit corresponds to the $m^{th}$ second terminal device.

3. The method according to claim 1 or 2, wherein the first indication information is carried in sidelink control information SCI associated with the first TB.

4. The method according to any one of claims 1 to 3, wherein the method further comprises:
   sending, by the first terminal device, a second source address and/or a second destination address to the M second terminal devices, wherein the second source address corresponds to the M second terminal devices, the second destination address corresponds to the M second terminal devices, and all or a part of bits of the second source address and/or the second destination address are carried in the SCI associated with the first TB.

5. The method according to claim 4, wherein a part of bits of the second source address and/or the second destination address are carried in the SCI associated with the first TB; and
   a remaining part of bits of the second source address and/or the second destination address are carried in a sidelink shared channel SL-SCH subheader corresponding to the first TB.

6. The method according to any one of claims 1 to 5, wherein the method further comprises:
   sending, by the first terminal device, first configuration information to the M second terminal devices, wherein the first configuration information is used to configure at least one of the following:

   a correspondence between the M second terminal devices and the M bits, wherein the $m^{th}$ bit in the M bits indicates whether the first TB comprises the MAC SDU corresponding to the $m^{th}$ second terminal device, and m=1, 2, ..., or M; or
   the second source address and/or the second destination address, wherein the second source address corresponds to the M second terminal devices, and the second destination address corresponds to the M second terminal devices.

7. The method according to any one of claims 1 to 6, wherein the first TB comprises K groups of MAC SDUs, the K groups of MAC SDUs correspond to N second terminal devices in the M second terminal devices, K is a positive integer, and $1<K\leq N$; and a subheader corresponding to a $1^{st}$ MAC SDU in a $k^{th}$ group of MAC SDUs in the K groups of MAC SDUs comprises the first source address and/or the first destination address corresponding to the $k^{th}$ group of MAC SDUs, the first source address and/or the first destination address corresponding to the $k^{th}$ group of MAC SDUs correspond/corresponds to one or more of the N second terminal devices, and k=1, 2, ..., or K.

8. The method according to claim 7, wherein a subheader corresponding to a $k_i^{th}$ MAC SDU in the $k^{th}$ group of MAC SDUs comprises second indication information; and

the second indication information indicates whether a subheader corresponding to a MAC SDU after the $k_i^{th}$ MAC SDU comprises the first source address and/or the first destination address corresponding to the MAC SDU after the $k_i^{th}$ MAC SDU, $k_i$=1, 2, ..., or $I_k$, and $I_k$ represents a quantity of MAC SDUs comprised in the $k^{th}$ group of MAC SDUs; or
the second indication information indicates that a subheader corresponding to a MAC SDU after the $k_i^{th}$ MAC SDU comprises the first source address and/or the first destination address corresponding to the MAC SDU after the $k_i^{th}$ MAC SDU, $k_i$=$I_k$, and $I_k$ represents a quantity of MAC SDUs comprised in the $k^{th}$ group of MAC SDUs.

9. The method according to any one of claims 1 to 6, wherein the first TB comprises K groups of MAC SDUs, the K groups of MAC SDUs correspond to N second terminal devices in the M second terminal devices, K is a positive integer, and $1<K\leq N$;

the first TB comprises K SL-SCH subheaders, the K SL-SCH subheaders are in one-to-one correspondence with the K groups of MAC SDUs, an SL-SCH subheader corresponding to a $k^{th}$ group of MAC SDUs in the K groups of MAC SDUs comprises the first source address and/or the first destination address corresponding to the $k^{th}$ group of MAC SDUs, the first source address and/or the first destination address corresponding to the $k^{th}$ group of MAC SDUs correspond/corresponds to one or more of the N second terminal devices, and k=1, 2, ..., or K;
a subheader corresponding to a $k_i^{th}$ MAC SDU in the $k^{th}$ group of MAC SDUs comprises third indication information; and
the third indication information indicates whether an SL-SCH subheader corresponding to a $(k+1)^{th}$ group of MAC SDUs is comprised after the $k_i^{th}$ MAC SDU, $k_i$=1, 2, ..., or $I_k$, and $I_k$ represents a quantity of MAC SDUs comprised in the $k^{th}$ group of MAC SDUs; or

the third indication information indicates that an SL-SCH subheader corresponding to a $(k+1)^{th}$ group of MAC SDUs is comprised after the $k_i^{th}$ MAC SDU, $k_i$=$I_k$, and $I_k$ represents a quantity of MAC SDUs comprised in the $k^{th}$ group of MAC SDUs.

10. The method according to any one of claims 1 to 9, wherein the method further comprises:

receiving, by the first terminal device on a first resource, feedback information from the N second terminal devices in the M second terminal devices, wherein the feedback information indicates a receiving status of the first TB; and
an index $H_n$ of a feedback resource unit corresponding to an $n^{th}$ second terminal device in the N second terminal devices in the first resource satisfies:

$$H_n=(T_{ID,n}+R_{ID,n})\mod(F),$$

wherein
$T_{ID,N}$ represents all or a part of bits of the first source address corresponding to data sent by the first terminal device to the $n^{th}$ second terminal device, or $T_{ID,N}$ is 0;
$R_{ID,n}$ represents all or a part of bits of the first destination address corresponding to the data sent by the first terminal device to the $n^{th}$ second terminal device, or $R_{ID,n}$ represents a number of the $n^{th}$ second terminal device in the M second terminal devices; and
F is a total quantity of indexes of feedback resource units comprised in the first resource, n=1, 2, ..., or N, and mod() represents a modulo operation.

11. A sidelink communication method, comprising:

receiving, by an $n^{th}$ second terminal device in N second terminal devices, first indication information from a first terminal device, wherein the first indication information indicates whether a first transport block TB comprises a media access control MAC service data unit SDU corresponding to an $m^{th}$ second terminal device in M second terminal devices, the M second terminal devices comprise the N second terminal devices, the first TB corresponds to at least two first source addresses and/or at least two first destination addresses, the at least two first source addresses correspond to at least two of the M second terminal devices, the at least two first destination addresses correspond to at least two of the M second terminal devices, both M and N are positive integers, $N\leq M$, m=1, 2, ...,

or M, and n=1, 2..., or N; and

receiving, by the n<sup>th</sup> second terminal device, the first TB from the first terminal device based on the first indication information.

12. The method according to claim 11, wherein the first indication information comprises M bits in one-to-one correspondence with the M second terminal devices, an m<sup>th</sup> bit in the M bits indicates whether the first TB comprises the MAC SDU corresponding to the m<sup>th</sup> second terminal device, and the m<sup>th</sup> bit corresponds to the m<sup>th</sup> second terminal device.

13. The method according to claim 11 or 12, wherein the first indication information is carried in sidelink control information SCI associated with the first TB.

14. The method according to any one of claims 11 to 13, wherein the method further comprises:
receiving, by the n<sup>th</sup> second terminal device, a second source address and/or a second destination address from the first terminal device, wherein the second source address corresponds to the M second terminal devices, the second destination address corresponds to the M second terminal devices, and all or a part of bits of the second source address and/or the second destination address are carried in the SCI associated with the first TB.

15. The method according to claim 14, wherein a part of bits of the second source address and/or the second destination address are carried in the SCI associated with the first TB; and
a remaining part of bits of the second source address and/or the second destination address are carried in a sidelink shared channel SL-SCH subheader corresponding to the first TB.

16. The method according to any one of claims 11 to 15, wherein the method further comprises:
receiving, by the n<sup>th</sup> second terminal device, first configuration information from the first terminal device, wherein the first configuration information is used to configure at least one of the following:

a correspondence between the M second terminal devices and the M bits, wherein the m<sup>th</sup> bit in the M bits indicates whether the first TB comprises the MAC SDU corresponding to the m<sup>th</sup> second terminal device; or
the second source address and/or the second destination address, wherein the second source address corresponds to the M second terminal devices, and the second destination address corresponds to the M second terminal devices.

17. The method according to any one of claims 11 to 16, wherein the first TB comprises K groups of MAC SDUs, the K groups of MAC SDUs correspond to the N second terminal devices, K is a positive integer, and 1<K≤N;

a subheader corresponding to a 1<sup>st</sup> MAC SDU in a k<sup>th</sup> group of MAC SDUs in the K groups of MAC SDUs comprises the first source address and/or the first destination address corresponding to the k<sup>th</sup> group of MAC SDUs, the first source address and/or the first destination address corresponding to the k<sup>th</sup> group of MAC SDUs correspond/corresponds to one or more of the N second terminal devices, and k=1, 2, ..., or K; and

the method further comprises:
determining, by the n<sup>th</sup> second terminal device based on the first source address and/or the first destination address corresponding to the k<sup>th</sup> group of MAC SDUs, whether the k<sup>th</sup> group of MAC SDUs corresponds to the n<sup>th</sup> second terminal device.

18. The method according to claim 17, wherein a subheader corresponding to a $k_i^{th}$ MAC SDU in the k<sup>th</sup> group of MAC SDUs comprises second indication information;

the second indication information indicates whether a subheader corresponding to a MAC SDU after the $k_i^{th}$ MAC SDU comprises the first source address and/or the first destination address corresponding to the MAC SDU after the $k_i^{th}$ MAC SDU, $k_i$=1, 2, ..., or $I_k$, and $I_k$ represents a quantity of MAC SDUs comprised in the k<sup>th</sup> group of MAC SDUs; or
the second indication information indicates that a subheader corresponding to a MAC SDU after the $k_i^{th}$ MAC SDU comprises the first source address and/or the first destination address corresponding to the MAC SDU after the $k_i^{th}$ MAC SDU, $k_i$=$I_k$, and $I_k$ represents a quantity of MAC SDUs comprised in the k<sup>th</sup> group of MAC SDUs; and
the method further comprises:
determining, by the n<sup>th</sup> second terminal device based on the second indication information comprised in the subheader corresponding to the $k_i^{th}$ MAC SDU, whether the subheader corresponding to the MAC SDU after the $k_i^{th}$ MAC SDU comprises the first source address and/or the first destination address corresponding to the MAC SDU after the $k_i^{th}$ MAC SDU.

19. The method according to any one of claims 11 to 16, wherein the first TB comprises K groups of MAC SDUs, the K groups of MAC SDUs correspond to the N second terminal devices, K is a positive integer, and 1<K≤N;

the first TB comprises K SL-SCH subheaders, the K SL-SCH subheaders are in one-to-one correspondence with the K groups of MAC SDUs, an SL-SCH subheader corresponding to a $k^{th}$ group of MAC SDUs in the K groups of MAC SDUs comprises the first source address and/or the first destination address corresponding to the $k^{th}$ group of MAC SDUs, the first source address and/or the first destination address corresponding to the $k^{th}$ group of MAC SDUs correspond/corresponds to one or more of the N second terminal devices, and k=1, 2, ..., or K;

a subheader corresponding to a $k_i^{th}$ MAC SDU in the $k^{th}$ group of MAC SDUs comprises third indication information;

the third indication information indicates whether an SL-SCH subheader corresponding to a $(k+1)^{th}$ group of MAC SDUs is comprised after the $k_i^{th}$ MAC SDU, $k_i=1, 2, ...,$ or $I_k$, and $I_k$ represents a quantity of MAC SDUs comprised in the $k^{th}$ group of MAC SDUs; or

the third indication information indicates that an SL-SCH subheader corresponding to a $(k+1)^{th}$ group of MAC SDUs is comprised after the $k_i^{th}$ MAC SDU, $k_i=I_k$, and $I_k$ represents a quantity of MAC SDUs comprised in the $k^{th}$ group of MAC SDUs; and

the method further comprises:

determining, by the $n^{th}$ second terminal device based on the first source address and/or the first destination address corresponding to the $k^{th}$ group of MAC SDUs, whether the $k^{th}$ group of MAC SDUs corresponds to the $n^{th}$ second terminal device; and

determining, by the $n^{th}$ second terminal device based on the third indication information comprised in the subheader corresponding to the $k_i^{th}$ MAC SDU, whether an SL-SCH subheader corresponding to an $(n+1)^{th}$ group of MAC SDUs is comprised after the $k_i^{th}$ MAC SDU.

20. The method according to any one of claims 11 to 19, wherein the method further comprises:

sending, by the $n^{th}$ second terminal device, feedback information of the $n^{th}$ second terminal device to the first terminal device by using a feedback resource unit corresponding to the $n^{th}$ second terminal device in a first resource, wherein the feedback information of the $n^{th}$ second terminal device indicates a receiving status of the first TB, and an index $H_n$ of the feedback resource unit corresponding to the $n^{th}$ second terminal device in the first resource satisfies:

$$H_n=(T_{ID,n}+R_{ID,n})\bmod(F),$$

wherein

$T_{ID,N}$ represents all or a part of bits of the first source address corresponding to data sent by the first terminal device to the $n^{th}$ second terminal device, or $T_{ID,N}$ is 0;

$R_{ID,n}$ represents all or a part of bits of the first destination address corresponding to the data sent by the first terminal device to the $n^{th}$ second terminal device, or $R_{ID,n}$ represents a number of the $n^{th}$ second terminal device in the M second terminal devices; and

$F$ is a total quantity of indexes of feedback resource units comprised in the first resource, and mod() represents a modulo operation.

21. A sidelink communication method, comprising:

generating, by a first terminal device, first data, wherein the first data comprises K transport blocks TBs, the K TBs are in one-to-one correspondence with K first source addresses and/or K first destination addresses, the K first source addresses correspond to N second terminal devices in M second terminal devices, the K first destination addresses correspond to the N second terminal devices, M, N, and K are all integers greater than 1, and $1<K\leq N\leq M$; and

sending, by the first terminal device, the first data to the M second terminal devices by using a first physical sidelink shared channel PSSCH.

22. The method according to claim 21, wherein different TBs in the K TBs have a same size, or different TBs in the K TBs correspond to a same quantity of resource units in a resource for sending the first data.

23. The method according to claim 21 or 22, wherein the method further comprises:
sending, by the first terminal device, fourth indication information to the N second terminal devices, wherein the fourth indication information indicates one or more of the following:

a size of each of the K TBs;
a quantity of resource units corresponding to each of the K TBs in the resource for sending the first data;
time domain resource location information and/or frequency domain resource location information corresponding to each of the K TBs in the resource for sending the first data; and
coding and/or modulation information corresponding to each of the K TBs.

24. The method according to any one of claims 21 to 23, wherein the resource for sending the first data is located on one subchannel or one frequency domain resource scheduling unit.

25. A sidelink communication method, comprising:

receiving, by an nth second terminal device in N second terminal devices, first data from a first terminal device by using a first physical sidelink shared channel PSSCH, wherein the first data comprises K transport blocks TBs, the K TBs correspond to K first source addresses and/or K first destination addresses, the K first source addresses correspond to the N second terminal devices, the K first destination addresses correspond to the N second terminal devices, both N and K are integers greater than 1, K≤N, and n=1, 2, ..., or N; and

determining, by the nth second terminal device based on the first source address and/or the first destination address corresponding to a kth TB in the K TBs, whether the kth TB corresponds to the nth second terminal device, wherein k=1, 2, ..., or K.

26. The method according to claim 25, wherein different TBs in the K TBs have a same size, or different TBs in the K TBs correspond to a same quantity of resource units in a resource for sending the first data.

27. The method according to claim 25 or 26, wherein the method further comprises:
receiving, by the nth second terminal device, fourth indication information from the first terminal device, wherein the fourth indication information indicates one or more of the following:

a size of each of the K TBs;
a quantity of resource units corresponding to each of the K TBs in the resource for sending the first data;
time domain resource location information and/or frequency domain resource location information corresponding to each of the K TBs in the resource for sending the first data; and
coding and/or modulation information corresponding to each of the K TBs.

28. The method according to any one of claims 25 to 27, wherein the resource for sending the first data is located on one subchannel or one frequency domain resource scheduling unit.

29. A communication apparatus, comprising a module or a unit configured to perform the method according to any one of claims 1 to 10, comprising a module or a unit configured to perform the method according to any one of claims 11 to 20, comprising a module or a unit configured to perform the method according to any one of claims 21 to 24, or comprising a module or a unit configured to perform the method according to any one of claims 25 to 28.

30. A communication apparatus, comprising a processor, wherein the processor is configured to execute a computer program or instructions stored in a memory, so that the communication apparatus performs the method according to any one of claims 1 to 10, the communication apparatus performs a module or a unit of the method according to any one of claims 11 to 20, the communication apparatus performs a module or a unit of the method according to any one of claims 21 to 24, or the communication apparatus performs a module or a unit of the method according to any one of claims 25 to 28.

31. The communication apparatus according to claim 30, wherein the communication apparatus further comprises the memory and/or a communication interface, and the communication interface is coupled to the processor; and
the communication interface is configured to input and/or output information.

32. A computer-readable storage medium, wherein the computer-readable storage medium stores a computer program or instructions, and when the computer program or the instructions are run on a communication apparatus, the communication apparatus performs the method according to any one of claims 1 to 10, the communication apparatus performs the method according to any one of claims 11 to 20, the communication apparatus performs the method according to any one of claims 21 to 24, or the communication apparatus performs the method according to any one of claims 25 to 28.

33. A computer program product, wherein the computer program product comprises a computer program or instructions used to perform the method according to any one of claims 1 to 10, comprises a computer program or instructions used to perform the method according to any one of claims 11 to 20, comprises a computer program or instructions used to perform the method according to any one of claims 21 to 24, or comprises a computer program or instructions used to perform the method according to any one of claims 25 to 28.

34. A chip, wherein the chip is coupled to a memory, and is configured to read and execute program instructions stored in the memory, to implement the method according to any one of claims 1 to 10, implement the method according to any one of claims 11 to 20, implement the method according to any one of claims 21 to 24, or implement the method according to any one of claims 25 to 28.

(a)

(b)

(c)

FIG. 1

Method 200

| First terminal device | N second terminal devices | M second terminal devices |
|---|---|---|

S210: First configuration information

S220: Second source address and/or second destination address

S230: First TB

S240: First indication information

S250: Feedback information

FIG. 2

Carry a multicast
identifier

1ST group of MAC SDUs
(corresponding to RX UE 1)

2nd group of MAC SDUs
(corresponding to RX UE 2)

3rd group of MAC SDUs
(corresponding to RX UE 3)

| SL-SCH subheader | MAC sub-PDU #1 | MAC sub-PDU #2 | MAC sub-PDU #3 | MAC sub-PDU #4 | MAC sub-PDU #5 |

| Subheader | MAC SDU #1 | Subheader | MAC SDU #2 | Subheader | MAC SDU #3 | Subheader | MAC SDU #4 | Subheader | MAC SDU #5 |

Carry an identifier
corresponding to the 1st
group of MAC SDUs

Carry second
indication
information

Carry an identifier
corresponding to the 2nd
group of MAC SDUs; and
carry second indication
information

Carry an identifier
corresponding to the 3rd
group of MAC SDUs

FIG. 3

Carry a multicast identifier

1st group of MAC SDUs (corresponding to RX UE 1)

2nd group of MAC SDUs (corresponding to RX UE 2)

3rd group of MAC SDUs (corresponding to RX UE 3)

| SL-SCH subheader | MAC sub-PDU #1 | MAC sub-PDU #2 | MAC sub-PDU #3 | MAC sub-PDU #4 | MAC sub-PDU #5 |

| Subheader | MAC SDU #1 | Subheader | MAC SDU #2 | Subheader | MAC SDU #3 | Subheader | MAC SDU #4 | Subheader | MAC SDU #5 |

Carry an identifier corresponding to the 1st group of MAC SDUs

Carry the identifier corresponding to the 1st group of MAC SDUs

Carry an identifier corresponding to the 2nd group of MAC SDUs

Carry an identifier corresponding to the 3rd group of MAC SDUs

Carry the identifier corresponding to the 3rd group of MAC SDUs

FIG. 4

EP 4 637 262 A1

FIG. 5

SL-SCH subheader #1 — Carry a multicast identifier

1st group of MAC SDUs (corresponding to RX UE 1): MAC sub-PDU #1, MAC sub-PDU #2
- MAC sub-PDU #1: Subheader, MAC SDU #1 — Carry third indication information
- MAC sub-PDU #2: Subheader, MAC SDU #2

Carry an identifier corresponding to the 1st group of MAC SDUs

SL-SCH subheader #2 — Carry an identifier corresponding to the 2nd group of MAC SDUs

2nd group of MAC SDUs (corresponding to RX UE 2): MAC sub-PDU #3
- MAC sub-PDU #3: Subheader, MAC SDU #3 — Carry third indication information

SL-SCH subheader #3 — Carry an identifier corresponding to the 3rd group of MAC SDUs

3rd group of MAC SDUs (corresponding to RX UE 3): MAC sub-PDU #4, MAC sub-PDU #5
- MAC sub-PDU #4: Subheader, MAC SDU #4
- MAC sub-PDU #5: Subheader, MAC SDU #5

Method 600

FIG. 6

FIG. 7

Method 800

FIG. 8

(a)

(b)

FIG. 9

Method 1000

| First terminal device | | M second terminal devices |
|---|---|---|

S1010: Third configuration information →

← S1020: Sixth indication information

← S1030: Seventh indication information

← S1040: Third TBs

FIG. 10

▢ PSSCH corresponding to TX UE 1     ▨ PSSCH corresponding to TX UE 2

■ PSSCH corresponding to TX UE 3

0  1  2  3  4  5  6  7  8  9  10  11  12  13

| AGC | PSCCH | | | | | | | | | | | | GP | Subchannel |

FIG. 11

1200

Transceiver unit 1210

Processing unit 1220

FIG. 12

1300

Processor 1310 — Transceiver 1330

Memory 1320

FIG. 13

Chip system 1400

Logic circuit 1410

Input/Output interface 1420

FIG. 14

## INTERNATIONAL SEARCH REPORT

| International application No. |
| --- |
| **PCT/CN2024/070130** |

**A. CLASSIFICATION OF SUBJECT MATTER**

H04W76/40(2018.01)i

According to International Patent Classification (IPC) or to both national classification and IPC

**B. FIELDS SEARCHED**

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNABS; CNTXT; CNKI; ENTXT; ENTXTC; VEN; 3GPP: 侧行, 侧, 旁, 链路, 小包, 小数据, 传输块, 地址, 指示, MAC SDU, sidelink, small, data, packet, transmission block, TB, address, instruction, indicat+

**C. DOCUMENTS CONSIDERED TO BE RELEVANT**

| Category* | Citation of document, with indication, where appropriate, of the relevant passages | Relevant to claim No. |
| --- | --- | --- |
| A | CN 111669835 A (HUAWEI TECHNOLOGIES CO., LTD.) 15 September 2020 (2020-09-15) description, paragraphs 3 and 15 | 1-34 |
| A | CN 112740641 A (GUANGDONG OPPO MOBILE TELECOMMUNICATIONS CORP., LTD.) 30 April 2021 (2021-04-30) entire document | 1-34 |
| A | EP 3861657 A1 (SAMSUNG ELECTRONICS CO., LTD.) 11 August 2021 (2021-08-11) entire document | 1-34 |
| A | KR 20200112569 A (SAMSUNG ELECTRONICS CO., LTD.) 05 October 2020 (2020-10-05) entire document | 1-34 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **18 January 2024** | **02 February 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/070130**

| Patent document cited in search report | | | Publication date (day/month/year) | Patent family member(s) | | | Publication date (day/month/year) |
|---|---|---|---|---|---|---|---|
| CN | 111669835 | A | 15 September 2020 | WO | 2020177169 | A1 | 10 September 2020 |
| | | | | CN | 111669835 | B | 13 January 2023 |
| CN | 112740641 | A | 30 April 2021 | WO | 2020223971 | A1 | 12 November 2020 |
| EP | 3861657 | A1 | 11 August 2021 | KR | 20220037492 | A | 24 March 2022 |
| | | | | EP | 3861657 | A4 | 22 December 2021 |
| | | | | US | 2021028891 | A1 | 28 January 2021 |
| | | | | CN | 112312351 | A | 28 January 2021 |
| | | | | US | 11463204 | B2 | 04 October 2022 |
| | | | | WO | 2021015577 | A1 | 28 January 2021 |
| KR | 20200112569 | A | 05 October 2020 | WO | 2020197218 | A1 | 01 October 2020 |

Form PCT/ISA/210 (patent family annex) (July 2022)

## REFERENCES CITED IN THE DESCRIPTION

**Patent documents cited in the description**

- CN 202310200629X

- CN 202310317372